# EUROPÄISCHE PATENTSCHRIFT

(11) **EP 0 904 644 B1**
(45) Veröffentlichungstag und Bekanntmachung des Hinweises auf die Patenterteilung: **05.04.2000**
(21) Anmeldenummer: 97925765.6
(22) Anmeldetag: 11.06.1997
(51) Int. Cl.: H04L 12/28, G05B 19/05, G05B 19/418

(54) **VERTEILTE REGEL- BZW. STEUERVORRICHTUNG FÜR DIE OBJEKTLEITTECHNIK MIT NETZBUS UND LOKALBUS**
DISTRIBUTED CLOSED AND/OR OPEN-LOOP CONTROL DEVICE FOR BUILDING MANAGEMENT SYSTEMS WITH NETWORK AND LOCAL BUS
DISPOSITIF DE REGULATION ET/OU DE COMMANDE A REPARTITION POUR LA GESTION DE SYSTEMES AVEC BUS RESEAU ET BUS LOCAL

(30) Priorität: 12.06.1996 AT 103396
(43) Veröffentlichungstag der Anmeldung: 31.03.1999
(73) Patentinhaber: "BSE" Elektro-Technik Gesellschaft mbH, 4550 Kremsmünster (AT)
(72) Erfinder: BIERBAUMER, Hans-Peter, A-4532 Rohr/Kremstal (AT)
(74) Vertreter: Secklehner, Günter, Dr.
(86) Internationale Anmeldenummer: AT9700121
(87) Internationale Veröffentlichungsnummer: WO9747203

(56) Entgegenhaltungen:
- EP-A- 0 459 757
- EP-A- 0 562 333
- WO-A-95/27357
- US-A- 5 522 044

## Beschreibung

Die Erfindung betrifft eine Regel- und/oder Steuervorrichtung für Objektleittechnik sowie ein daraus gebildetes Datenkommunikationssystem, wie dies im Oberbegriff der Ansprüche 1, 2 und 12 beschrieben ist.

Aus der EP 0 459 757 A ist ein Ringnetzwerk bekannt, bei dem die Steuermodule, insbesondere die Regel- und/oder Steuervorrichtungen, zwei Schnittstellen aufweisen, wobei das Ringnetzwerk aus einem Hauptbus und einem Nebenbus gebildet wird. Der Hauptbus verbindet hierbei zwei Steuermodule, wodurch ein direkter Datenaustausch zwischen den beiden Steuermodulen möglich ist. Am Nebenbus werden mehrere Steuermodule angeordnet, sodaß ein ringförmiger Datenaustausch in einer Richtung durchgeführt werden kann. Damit ein Datenaustausch zwischen zwei Steuermodulen am Nebenbus durchgeführt werden kann, wird von einem Steuermodul das Ringnetzwerk unterbrochen, sodaß von dem Steuermodul die Daten in Form eines Datenprotokolles in das Ringnetzwerk eingespeist werden kann. Nachteilig ist hierbei, daß durch das Unterbrechen des Ringnetzwerkes ein Datentransfer eines weiteren Steuermoduls, insbesondere einer Regel- und/oder Steuervorrichtung, über das Ringnetzwerk, insbesondere den Nebenbus, nicht mehr möglich ist, da ein Datentransfer nur in einer Richtung zwischen einem oder mehreren Steuermodulen möglich ist und erst nach Abarbeitung bzw. Verarbeitung dieses Datentransfers ein weiterer Datentransfer gestartet werden kann.

Aus der US 5,522,044 A ist eine Regel- und/oder Steuervorrichtung für die Gebäudetechnik bekannt, mit der über hierarchisch strukturierte Netzwerke verteilte weitere Regel- und/oder Steuervorrichtungen miteinander in Verbindung stehen, wobei das Netzwerk durch ein Leitungssystem mit zumindest zwei Enden gebildet ist. Mit den Regel- und/oder Steuervorrichtungen sind über jeweils einem Lokalbus die Zusatzmodule angeschlossen. Nachteilig ist hier wiederum, daß kein gleichzeitiger Datenaustasch zwischen zwei Regel- und/oder Steuervorrichtungen und zwei weiteren Regel- und/oder Steuervorrichtungen durchgeführt werden kann.

Es ist in der Objektleittechnik derzeit bekannt, teilweise selbstprogrammierbare Steuerungen, zur Regelung und/oder Steuerung der verschiedenen Funktionen in einem Objekt, wie beispielsweise Raumtemperatur, Beleuchtung, Prüfung der Zugangsberechtigung, Außenjalousie und dgl., zu steuern. Mit derartigen selbstprogrammierbaren Steuerungen können diese Regel- und/oder Steuervorgänge auch vollautomatisch nach entsprechenden vordefinierten Umgebungsbedingungen eingeleitet, ausgeführt und überwacht werden. Nachteilig ist hierbei, daß vor allem eine Nachrüstung von zusätzlichen Funktionen kaum möglich ist oder nur mit umfangreichen Kabelverlegungsarbeiten bzw. Softwareänderungen bewerkstelligt werden kann.

Der vorliegenden Erfindung liegt die Aufgabe zugrunde, eine Regel- und/oder Steuervorrichtung sowie ein Datenkommunikationssystem für die Objektleittechnik zu schaffen, welches aus wenigen standardisierten Bauteilen besteht und universell an unterschiedliche Einsatzfälle angepaßt werden kann.

Diese Aufgabe der Erfindung wird durch die Merkmale im Anspruch 1 gelöst. Vorteilhaft ist hierbei, daß der Netzbus gleichzeitig für mehrere Verbindungsaufbauten zwischen unterschiedlichen Regel- und/oder Steuervorrichtungen verwendet werden kann und damit die Zeitdauer für den Austausch von Daten zwischen den Regel- und/ oder Steuervorrichtungen bzw. diesen und dem Server bzw. den Zusatzmodulen erheblich beschleunigt werden kann. Ein weiterer nicht vorhersehbarer Vorteil wird durch die galvanische Trennung der Schnittstellen erreicht, da dadurch ein gleichzeitiger voneinander unabhängiger Datenaustausch zwischen mehreren Regel- und/oder Steuervorrichtungen durchgeführt werden kann. So kann z.B. eine Regel- und/oder Steuervorrichtung mit einer weiteren Regel- und/oder Steuervorrichtung einen Datenaustausch über ein Segment des Netzbusses und gleichzeitig eine weitere Regel- und/oder Steuervorrichtung mit einer anderen Regel- und/oder Steuervorrichtung ebenfalls einen Datenaustausch über ein weiteres Segment des Netzbusses durchführen. Ein weiterer Vorteil liegt darin, daß bei Ausfall eines Segmentes dies keinen Einfluß auf auf die weiteren Regel- und/oder Steuervorrichtungen hat.

Vorteilhaft ist weiters aber auch eine bevorzugt eigenständige Lösung gemäß Anspruch 2, da dadurch mit einer einheitlichen Baugröße der Regel- und/oder Steuervorrichtung das Auslangen gefunden werden kann, da ein Ausgleich der benötigten Rechnerleistungen zwischen großen und kleinen Räumen durch die Verlagerung der Programmteile bzw. die Aufteilung der verschiedenen Programme auf verschiedene Regel- und/oder Steuervorrichtungen erzielt werden kann. Dadurch ist trotz der standardisierten Baugröße der Regel- und/oder Steuervorrichtungen eine problemlose Anpassung der Rechnerleistung an unterschiedlich große Objekte möglich. Damit ist aber auch jeder Zeit eine nachträgliche Erweiterung und Anpassung an geänderte Umgebungsbedingungen möglich.

Vorteilhaft ist aber auch eine Ausbildung nach den Ansprüchen 3 und 4, da dadurch für den Aufbau des Netzbusses Leitungen eingespart werden können, sodaß eine einfache Verdrahtung für das Datenkommunikationssystem geschaffen wird.

Von Vorteil ist auch eine Ausgestaltung nach Anspruch 5, da dadurch eine rasche Weiterleitung des Datenpaketes von einer Schnittstelle zur weiteren Schnittstelle erreicht wird.

Es ist aber auch eine Ausbildung nach Anspruch 6 von Vorteil, da dadurch ein externer Zugriff auf das Datenkommunikationssystem, beispielsweise über ein Modem von einem weiteren Computer, möglich ist, sodaß eine Fernwartung des gesamten Datenkommunikationssystems erreicht wird.

Eine weitere Ausgestaltung nach Anspruch 7 ermöglicht, daß bei häufiger Datenübertragung zwischen zwei Regel- und/oder Steuervorrichtungen das Segment des Netzbusses auf die häufige Datenübertragung abgestimmt werden kann, sodaß ein möglichst schneller Datenaustausch zwischen zwei Regel- und/oder Steuervorrichtungen erreicht wird.

Von Vorteil ist auch eine Ausgestaltung nach den Ansprüchen 8 und 9, da dadurch eine einfache Zuordnung der Anwendungsprogramme zu den Zusatzmodulen erreicht wird.

Es ist aber auch eine Ausgestaltung nach Anspruch 10 von Vorteil, da dadurch eine eindeutige Kennung der einzelnen Regel- und/oder Steuervorrichtungen geschaffen wird.

Die Erfindung umfaßt auch ein Datenkommunikationssystem für die Objektleittechnik, wie es im Oberbegriff des Anspruches 11 beschrieben ist.

Dieses Datenkommunikationssystem für die Objektleittechnik ist durch die Merkmale im Kennzeichenteil des Anspruches 11 gekennzeichnet. Vorteilhaft ist hierbei, daß durch Anordnungen mehrerer Regel- und/oder Steuervorrichtungen über einen Netzbus eine Aufteilung der Intelligenz auf die einzelnen Regel- und/oder Steuervorrichtungen erreicht wird. Ein weiterer nicht vorhersehbarer Vorteil liegt darin, daß durch die Aufteilung der Intelligenz auf die einzelnen Regel- und/oder Steuervorrichtungen die Datenübertragung über den Netzbus reduziert werden kann. Ein weiterer Vorteil liegt darin, daß dadurch das Anwendungsprogramm keinen direkten Zugriff auf die Hardware der Regel- und/ oder Steuervorrichtung und der Zusatzmodule hat, sodaß ein multifunktionales Datenkommunikationssystem geschaffen werden kann.

Von Vorteil ist auch eine Ausgestaltung nach Anspruch 12, da dadurch eine optimale Überwachung eines Raumes durchgeführt werden kann.

Es ist aber auch eine Ausbildung nach Anspruch 13 von Vorteil, da dadurch die volle Kapazität der Regel- und/oder Steuervorrichtung ausgenützt werden kann.

Von Vorteil ist auch eine Ausbildung nach Anspruch 14, da dadurch jederzeit und von jedem beliebigen Raum auf das Datenkommunikationssystem zugegriffen werden kann.

Es ist auch eine Ausgestaltung nach Anspruch 15 von Vorteil, da dadurch eine eindeutige Zuordnung zu den einzelnen Komponenten des Datenkommunikationssystems erreicht wird.

Eine Ausbildung nach den Ansprüchen 16 bis 19 ist von Vorteil, da dadurch eine eindeutige Zuordnung des Datenpaketes erreicht wird.

Von Vorteil ist auch eine Ausbildung nach Anspruch 20, da dadurch festgestellt werden kann, wann das Datenpaket von einer Regel- und/oder Steuervorrichtung ausgesandt wurde.

Schließlich ist auch eine Ausbildung nach den Ansprüchen 21 und 22 von Vorteil, da dadurch ein unabhängiger Zugriff von einem oder mehreren Anwendungsprogrammen über die Kommunikationsmodule auf die Zusatzmodule erreicht wird.

Zum besseren Verständnis der Erfindung wurde diese im nachfolgenden anhand eines Ausführungsbeispieles näher beschrieben.

Es zeigen:
- Fig. 1: ein Schaubild für die Anwendung eines Datenkommunikationssystems in schematisch vereinfachter Darstellung;
- Fig. 2: ein Blockschaltbild des erfindungsgemäßen Datenkommunikationssystems in vereinfachter und schematischer Darstellung;
- Fig. 3: ein Ablaufdiagramm zur Steuerung einer Regel- und/oder Steuervorrichtung des Datenkommunikationssystems in vereinfachter und schematischer Darstellung.

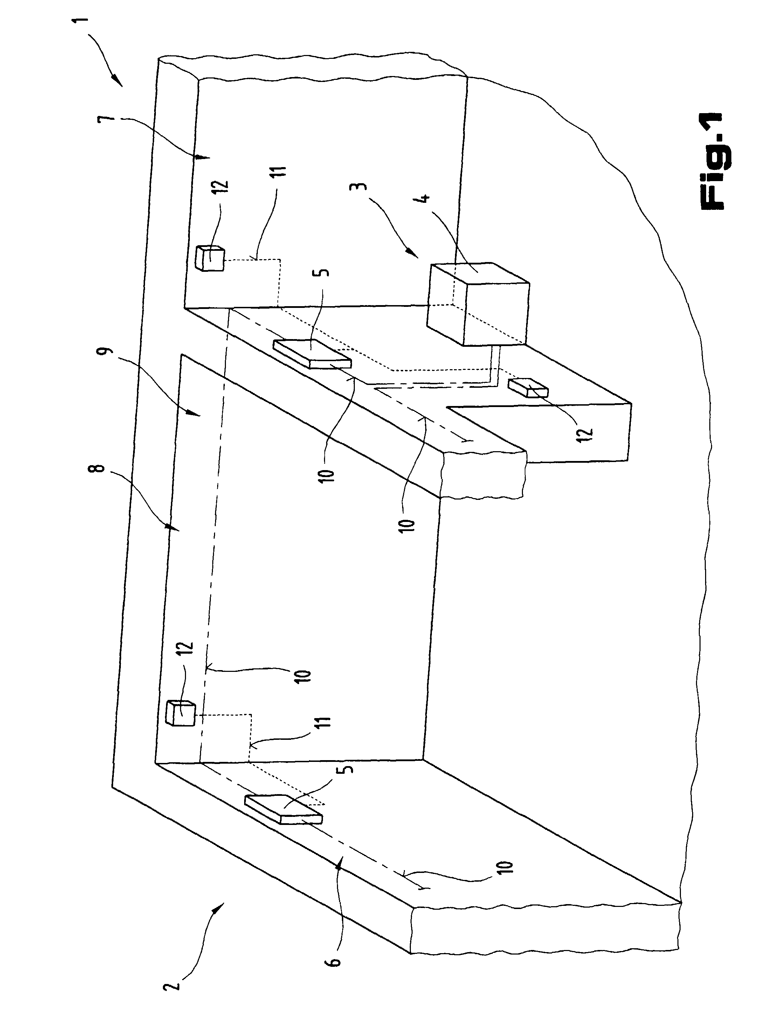

In Fig. 1 ist ein Datenkommunikationssystem 1 für die Objektleittechnik, insbesondere für ein Gebäude 2 gezeigt.

Das Datenkommunikationssystem 1 besteht aus einen Server 3, der beispielsweise durch einen Personalcomputer 4 gebildet wird, und zumindest einer oder mehrerer Grundmodulen 5. Die Grundmodule 5 sind dabei jeweils in einem zu überwachenden Raum 6, 7 des Gebäudes 2 angeordnet. Der Server 3 und die Grundmodule 5 werden dabei über einen Netzbus 8 miteinander verbunden. Die Grundmodule 5 können dabei durch eine Rechnereinheit, insbesondere einen Mikroprozessor, gebildet werden.

Der Netzbus 8 wird beispielsweise aus einem Ringnetzwerk 9 gebildet, wobei das Ringnetzwerk 9 aus mehreren Leitungen 10 gebildet wird und der Übersichtlichkeit halber nur eine Leitung 10 dargestellt ist. Selbstverständlich ist es möglich, daß anstelle des Ringnetzwerkes 9 auch andere Formen von Netzbussen 8, wie beispielsweise ein Sternnetzwerk, eingesetzt werden können.

Jedem Grundmodul 5 des Datenkommunikationssystems 1 ist jeweils ein eigener Lokalbus 11 zugeordnet, an dem ein oder mehrere Zusatzmodule 12 angeschlossen sein können. Die Zusatzmodule 12 können beispielsweise durch eine Temperatursteuervorrichtung, eine Lichtsteuerung, ein Zutrittskontrollsystem, ein Heizungsregelungssystem, eine Brandmeldeanlage, eine Alarmanlage, eine Jalousiensteuerung, ein Objektverfolgungssystem usw. gebildet sein, wobei die Steuerung dieser Zusatzmodule 12 über den Lokalbus 11 erfolgt, ohne daß dabei von den Grundmodulen 5 über den Netzbus 8 auf den Server 3 zugegriffen werden muß. Dies ist deshalb möglich, da die einzelnen Grundmodule 5 mit einer eigenen Intelligenz ausgestattet sind, sodaß das Abarbeiten der Daten von den Zusatzmodulen 12 bzw. die Steuerung der einzelnen Zusatzmodule 12 direkt von den Grundmodulen 5 durchgeführt werden kann, ohne daß dabei ein Zugriff der Grundmodule 5 über den Netzbus 8 an den Server 3 erforderlich ist. Der Netzbus 8 sowie der Lokalbus 11 sind bevorzugt als serielles Bussystem ausgebildet. Es ist auch möglich, daß mehrere gleiche Zusatzmodule 12 an einem Grundmodul 5 bzw. an mehreren Grundmodulen 5 angeordnet sein können, wobei die Steuerung dieser Zusatzmodule 12 von nur einem Grundmodul 5 durchgeführt wird.

Der Server 3 hat die Aufgabe, die Daten von den einzelnen Grundmodulen 5 zu sammeln, aufzubereiten und wenn nötig zu visualisieren. Dazu ist es möglich, daß im Server 3 ein Softwareprogramm installiert ist, von dem die einzelnen Grundmodule 5 abgefragt bzw. gesteuert werden können. Der Server 3 weist weiters eine oder mehrere Datenbanken auf, in der sämtliche Daten der einzelnen Grundmodule 5, die über den Netzbus 8 an den Server 3 gelangen, protokolliert und gespeichert werden. Somit ist es jederzeit möglich, ein Protokoll für die einzelnen Grundmodule 5 zu erstellen. Dabei ist es beispielsweise möglich, eine Zeitspanne zu rekonstruieren, wo festgestellt werden kann, welche Tätigkeiten die einzelnen Grundmodule 5 zu einem gewissen Zeitpunkt durchgeführt wurden. Weiters hat der Server 3 die Aufgabe, den Netzbus 8 zu initialisieren und zu überwachen. Der Server 3 weist weiters eine LAN/WAN-Schnittstelle auf, über die extern, beispielsweise über ein Modem, auf das Datenkommunikationssystem 1 bzw. auf den Server 3 zugegriffen werden kann, sodaß beispielsweise die Wartung und Installation von neuen Softwarepaketen sowie ein Zugriff auf die einzelnen Grundmodule 5 bzw. auf die Zusatzmodule 12 möglich ist.

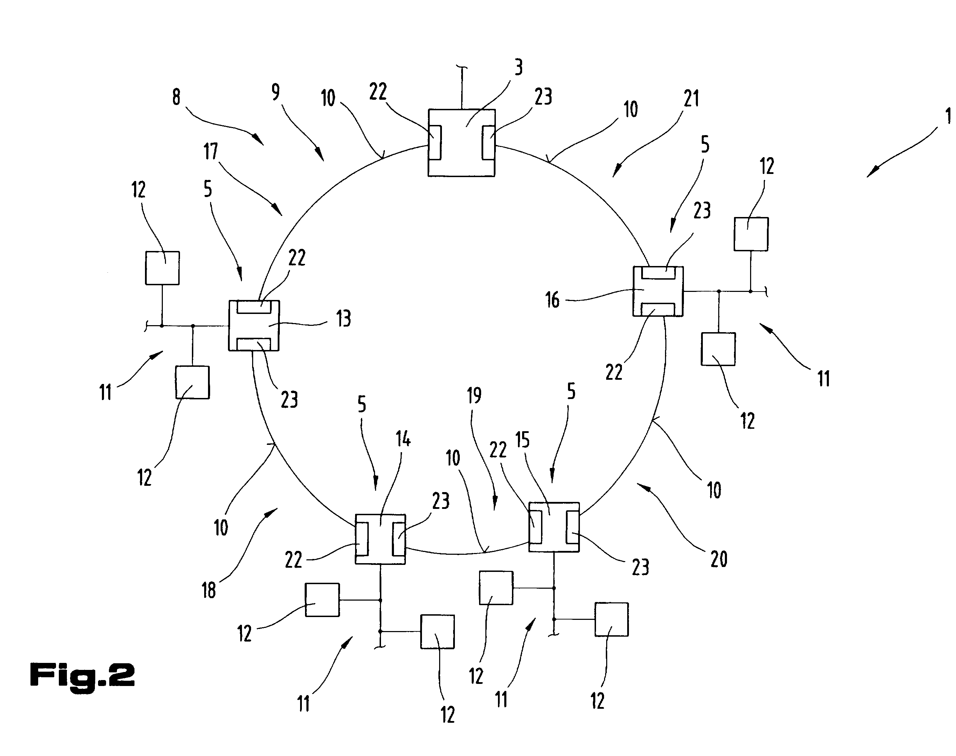

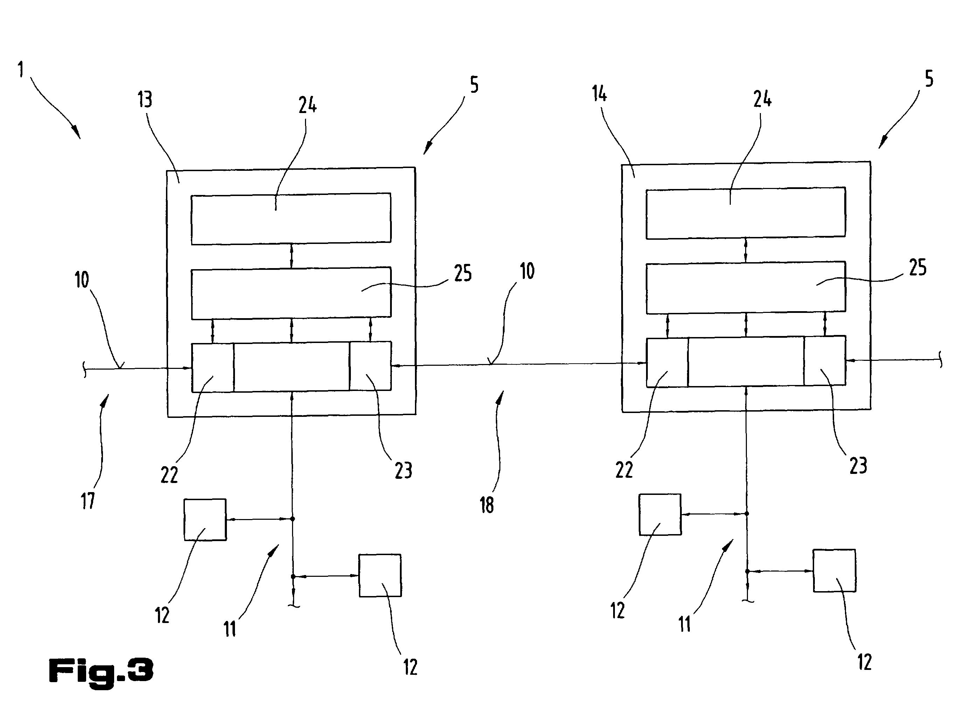

In den Fig. 2 und 3 ist ein schematischer Aufbau und ein schematisches Ablaufdiagramm des Datenkommunikationssystems 1 dargestellt, wobei für die selben Teile der zuvor beschriebenen Figur dieselben Bezugszeichen verwendet werden.

Die Grundmodule 5 werden dabei aus einer Regel- und/oder Steuervorrichtung 13 bis 16, die eine Rechnereinheit, insbesondere einen Mikroprozessor, aufweisen, gebildet, sodaß jede Regel- und/oder Steuervorrichtung 13 bis 16 eine eigene Intelligenz besitzt. Durch das Aufteilen der Intelligenz auf die einzelnen Regel- und/oder Steuervorrichtungen 13 bis 16 wird ein sogenanntes Master-Master-System geschaffen. Vorteilhaft ist dabei, daß durch die Aufteilung der Intelligenz auf die Regel- und/oder Steuervorrichtung 13 bis 16 eine Entlastung des Netzbusses 8 erreicht wird, sodaß dadurch ein Netzbus 8 verwendet werden kann, bei dem die Übertragungsgeschwindigkeit relativ niedrig gewählt werden kann, jedoch eine hohe Übertragungssicherheit gewährleistet ist, wie dies bei dem Ringnetzwerk 9 der Fall ist.

Der Netzbus 8, insbesondere das Ringnetzwerk 9, wird bei dem erfindungsgemäßen Datenkommunikationssystem 1 in einzelne unabhängige Segmente 17 bis 21 aufgeteilt. Dazu sind die einzelnen Regel- und/oder Steuervorrichtungen 13 bis 16 mit zwei unabhängigen Schnittstellen 22, 23 ausgestattet. Die Schnittstellen 22, 23 sind dabei galvanisch voneinander getrennt und jede der Schnittstellen 22, 23 der Regel- und/ oder Steuervorrichtung 13 bis 16 ist über die Leitung 10 des Netzbusses 8 mit einer weiteren Schnittstelle 22, 23 einer weiteren Regel- und/oder Steuervorrichtung 13 bis 16 bzw. mit dem Server 3, der ebenfalls für den Netzbus 8 zwei galvanisch voneinander getrennte Schnittstellen 22, 23 aufweist, verbunden.

Um eine galvanische Trennung der einzelnen Schnittstellen 22, 23 zu erreichen, kann zwischen den beiden Schnittstellen 22, 23 eine Trennvorrichtung angeordnet sein. Diese Trennvorrichtung kann beispielsweise vom Mikroprozessor bzw. der Rechnereinheit der Regel- und/oder Steuervorrichtung 13 bis 16 und/oder einem weiteren Mikroprozessor bzw. einer weiteren Rechnereinheit einer weiteren Regel- und/oder Steuervorrichtung 13 bis 16 und/oder dein Server 3 angesteuert werden. Vorteilhaft ist dabei, daß beispielsweise bei einem Stromausfall oder einer Störung einer Regel- und/ oder Steuervorrichtung 13 bis 16 die Trennvorrichtung so angesteuert wird, daß die beiden Schnittstellen 22, 23 sozusagen kurzgeschlossen wird, sodaß bei einem Datenaustausch zwischen zwei Regel- und/oder Steuervorrichtungen 13 bis 16 die Daten direkt von der Schnittstelle 22 auf die Schnittstelle 23 weitergeleitet werden. Bei einem normalen Datenaustausch werden von der Regel- und/oder Steuervorrichtung 13 bis 16 die Daten von einer der beiden Schnittstellen 22, 23 empfangen. Die Daten werden anschließend von der Regel- und/oder Steuervorrichtung 13 bis 16 überprüft.

Betreffen die Daten diese Regel- und/oder Steuervorrichtung 13 bis 16, so werden die gesamten Daten in der Regel-und/oder Steuervorrichtung 13 bis 16 verarbeitet. Betreffen jedoch die Daten nicht diese Regel- und/oder Steuervorrichtung 13 bis 16, so werden diese über die weitere Schnittstelle 22 bzw. 23 wieder an den Netzbus 8 ausgesandt, sodaß die Daten von einer weiteren Regel- und/oder Steuervorrichtung 13 bis 16 empfangen werden können.

Der Datenaustausch zwischen den einzelnen Regel- und/oder Steuervorrichtungen 13 bis 16 bzw. dem Server 3 erfolgt über die einzelnen Segmente 17 bis 21 des Ringnetzwerkes 9. Das Ringnetzwerk 9 wird dazu bevorzugt aus zwei Leitungen 10, insbesondere aus einer Hinleitung und einer Rückleitung, gebildet, sodaß zwischen zwei Schnittstellen 22, 23 zweier Regel- und/oder Steuervorrichtungen 13 bis 16 über das Ringnetzwerk 9 eine Stromschleife geschaffen werden kann. Es ist auch nicht erforderlich, daß für die Datenübertragung weitere Handshake-Leitungen eingesetzt werden müssen, da die einzelnen Daten von den Regel- und/oder Steuervorrichtungen 13 bis 16 bzw. dem Server 3 automatisch durch ein spezielles Busprotokoll bzw. ein Übertragungsprotokoll erkannt und verarbeitet werden.

Für die Übertragung der einzelnen Daten wird eine serielle Übertragungsform verwendet. Die einzelnen Segmente 17 bis 21 des Netzbusses 8 weisen dabei die selben Parameter für die Datenübertragung auf, d.h., daß beispielsweise die Baudrate bzw. der Byteaufbau für jedes Segment 17 bis 21 des Netzbusses 8 gleich ist. Dabei ist es möglich, daß durch die Aufteilung des Ringnetzwerkes 9 in die einzelnen Segmente 17 bis 21 die Parameter des Ringnetzwerkes 9, wie beispielsweise die Baudrate, der Byteaufbau usw., für jedes Segment 17 bis 21 des Ringnetzwerkes 9 unterschiedlich festgelegt werden kann, d.h., daß beispielsweise das Segment 17 des Netzbusses 8 mit einer Übertragungsgeschwindigkeit von 9600 Baud und die restlichen Segmente 18 bis 21 mit einer Übertragungsgeschwindigkeit von 4800 Baud definiert werden können.

Um einen Datenaustausch zwischen zwei Regel- und/oder Steuervorrichtungen 13 bis 16 zu erreichen, wird von einer Regel- und/oder Steuervorrichtung 13 über eine Schnittstelle 23 ein Datenpaket mit einer für die weitere Regel- und/oder Steuervorrichtung 14 vergebene Zuordnungsnummer ausgesandt. Die an der anderen Seite des Segmentes 18 des Netzbusse 8 befindliche Regel- und/oder Steuervorrichtung 14 empfängt daraufhin über ihre Schnittstelle 22 das Datenpaket und wertet die Zuordnungsnummer aus. Stimmt die Zuordnungsnummer mit der in der Regel- und/oder Steuervorrichtung 14 hinterlegten Zuordnungsnummer überein, so werden von der Regel- und/oder Steuervorrichtung 14 die restlichen Daten verarbeitet. Stimmt jedoch die Zuordnungsnummer mit der hinterlegten Zuordnungsnummer nicht überein, so sendet die Regel- und/oder Steuervorrichtung 14 das Datenpaket an der weiteren Schnittstelle 23 über den Netzbus 8 wieder aus. Dieser Vorgang wird solange durchgeführt, bis das Datenpaket an der richtigen Regel- und/oder Steuervorrichtung 15 oder 16 angelangt ist.

Bei Übereinstimmung der Zuordnungsnummer merkt sich die entsprechende Regel- und/oder Steuervorrichtung 14 die Schnittstelle 22, die das Datenpaket erhalten hat, sodaß bei einer Rücksendung eines weiteren Datenpaketes dieses wiederum über die selbe Schnittstelle 22 ausgesandt wird. Dies ist deshalb von Vorteil, da bei einem Datenaustausch von zwei Regel- und/oder Steuervorrichtungen 13 und 14, die über ein Segment 18 des Netzbusses 8 verbunden sind, immer der kürzere Übertragungsweg benützt wird. Ein weiterer Vorteil ergibt sich durch die sogenannte Punkt zu Punkt Verbindung des Netzbusses 8, da mehrere Regel- und/oder Steuervorrichtungen 13 bis 16 gleichzeitig auf den Netzbus 8 zugreifen können, ohne daß dabei die einzelnen Datenpakete vermischt werden, d.h., daß beispielsweise die Regel- und/oder Steuervorrichtung 13 über das Segment 18 des Netzbusses 8 mit der Regel- und/oder Steuervorrichtung 14 einen Datenaustausch durchführen kann und gleichzeitig beispielsweise die Regel- und/oder Steuervorrichtung 15 über das Segment 20 des Netzbusses 8 mit der Regel- und/oder Steuervorrichtung 16 ebenfalls einen Datenaustausch vornehmen kann. Würden jedoch Überschneidungen auftreten, d.h., daß eine Regel- und/oder Steuervorrichtung 16 mit einer Regel- und/oder Steuervorrichtung 14 über die Segmente 21, 17 und 18 des Netzbusses 8 einen Datenaustausch vornehmen will, wobei die Regel- und/oder Steuervorrichtung 13 bereits einen Datenaustausch mit der Regel- und/oder Steuervorrichtung 14 durchführt, so wird jeweils ein Datenpaket der Regel- und/oder Steuervorrichtungen 16 von der Regel- und/oder Steuervorrichtung 13 gespeichert und abwechselnd ein eigenes Datenpaket und anschließend ein Datenpaket von der Regel- und/oder Steuervorrichtung 16 ausgesandt.

Wird von einer Regel- und/oder Steuervorrichtung 13 bis 16 ein fehlerhaftes Datenpaket, beispielsweise mit einer im Datenkommunikationssystem 1 nicht zugeteilten Zuordnungsnummer, ausgesandt, so wird dieses Datenpaket von jeder Regel- und/oder Steuervorrichtung 13 bis 16 an das nachfolgende Segment 17 bis 21 ausgesandt, sodaß dieses Datenpaket im Ringnetzwerk 9 ständig im Kreis laufen würde und somit eine Belastung des Netzbusses 8 entstehen würde. Dies wird insofern verhindert, indem der Server 3 alle über ihn gesandten Datenpakete überprüft und bei Auftreten eines fehlerhaften Datenpaketes dieses vom Server 3 aufgenommen und anschließend vernichtet wird. Dies kann beispielsweise so erfolgen, daß der Server 3 jede Zuordnungsnummer eines Datenpaketes mit den in seinem Speicher hinterlegten Zuordnungsnummern überprüft und bei nicht Übereinstimmung dieser Zuordnungsnummer mit den in den Speicher hinterlegten Zuordnungsnummern dieses Datenpaket nicht mehr über das weitere Segment 17 bis 21 des Netzbusses 8 aussendet. Selbstverständlich ist es möglich, daß die Überprüfung des Datenpaketes erst nach einigen Umläufen um das Ringnetzwerk 9 stattfindet. Dies ist von Vorteil, da dadurch eine schnellere Daten weiterleitung der einzelnen Datenpakete erzielt wird.

Weiters ist es durch die Punkt zu Punkt Verbindung der einzelnen Regel- und/oder Steuervorrichtungen 13 bis 16, also durch die Aufteilung des Netzbusses 8 in die einzelnen Segmenten 17 bis 21 oder Gruppen von Segmenten, möglich, daß bei Auftreten eines Fehlers im Netzbus 8, beispielsweise durch eine fehlerhafte Schnittstelle 22, 23 bzw. durch ein fehlerhaftes Segment 17 bis 21 des Netzbusse 8, ein Datenaustausch zwischen den einzelnen Regel- und/oder Steuervorrichtungen 13 bis 16 durchgeführt werden kann, da ein Verbindungsaufbau zwischen zwei Regel- und/oder Steuervorrichtungen 13 bis 16 über zwei Richtungen erfolgen kann und somit der fehlerhafte Teil des Netzbusses 8 umgangen werden kann. Tritt jedoch in zwei Segmenten 17 bis 21 des Netzbusses 8 ein Fehler auf, so kann die zwischen den beiden Segmenten 17 bis 21 angeordnete Regel- und/oder Steuervorrichtung 13 bis 16 von den weiteren Regel- und/oder Steuervorrichtungen 13 bis 16 nicht zum Datenaustausch aufgefordert werden. Dies bewirkt jedoch keinen Zusammenbruch des Netzbusses 8, sodaß die restlichen Regel- und/oder Steuervorrichtungen 13 bis 16 nicht beeinflußt werden.

Für die Inbetriebnahme des Datenkommunikationssystems 1 wird ein Betriebssystem benötigt. Das Betriebssystem wird dabei am Server 3 installiert. Der Server 3 verwendet beispielsweise ein Microsoft Windows-Betriebssystem, insbesondere Windows NT bzw. Windows 95. Die Regel- und/oder Steuervorrichtungen 13 bis 16 verwenden ein eigens für diese entwickeltes Betriebssystem, wobei darauf Wert gelegt wurde, daß die Betriebssysteme austauschbar sind.

Bei der Inbetriebnahme des Datenkommunikationssystems 1 wird zuerst die Initialisierung der einzelnen Regel- und/oder Steuervorrichtungen 13 bis 16 von dem Server 3 durchgeführt, d.h., daß allen Regel- und/oder Steuervorrichtungen 13 bis 16 eine Zuordnungsnummer, insbesondere eine Adresse, zugeordnet wird und anschließend für die Zusatzmodule 12 entsprechende Adressen und Anwendungsprogramme 24 sowie ein Kommunikationsmodul 25, wie schematisch in Fig. 3 dargestellt, von dem Server 3 zugeteilt werden.

Die einzelnen Regel- und/oder Steuervorrichtungen 13 bis 16, die Zusatzmodule 12 sowie der Server 3 sind dabei beispielsweise durch Tip-Schalter für die hardewaremäßige Adressierung ausgestattet, wobei der Server 3 beispielsweise die Adresse Null aufweist. Selbstverständlich ist es möglich, daß bei der Herstellung der einzelnen Komponenten eine direkte Hardwareadressierung vergeben wird. Um die einzelnen Adressen der einzelnen Regel- und/oder Steuervorrichtungen 13 bis 16 bzw. der Zusatzmodule 12 feststellen zu können, sendet der Server 3 über das Ringnetzwerk 9 ein spezielles Datenpaket aus, wodurch die einzelnen Regel- und/oder Steuervorrichtungen 13 bis 16 aufgefordert werden, die festgelegte Hardwareadresse der Regel- und/ oder Steuervorrichtung 13 bis 16 sowie der Zusatzmodule 12 an den Server 3 zu senden. Der Server 3 wertet nach Erhalt aller Daten bzw. nach Ablauf einer voreinstellbaren Zeitdauer die erhaltenen Daten aus und legt für jede erhaltene Hardwareadresse eine logische Adresse fest. Anschließend werden die festgelegten logischen Adressen über das Ringnetzwerk 9 mit der entsprechenden Hardwareadresse ausgesandt. Die logische Adresse wird von den einzelnen Regel- und/oder Steuervorrichtungen 13 bis 16 in einem stromausfallsresidenten Speicher geschrieben. Weiters werden die einzelnen Regel- und/oder Steuervorrichtungen 13 bis 16 vom Server 3 aufgefordert, ein Antwortpaket an den Server 3 zu senden, in dem bereits die logischen Adressen enthalten sind. Nachdem der Server 3 alle Antwortpakete erhalten hat, sendet dieser ein Aktivierungspaket aus, sodaß die Regel- und/oder Steuervorrichtungen 13 bis 16 sowie die Zusatzmodule 12 mit den entsprechenden logischen Adressen aktiviert werden. Selbstverständlich ist es möglich, daß für die Zusatzmodule 12 die Zuordnungsnummer, insbesondere die Adresse, von der Regel- und/oder Steuervorrichtung 13 bis 16 vergeben werden kann. Dabei muß jedoch gewährleistet sein, daß nur eine Adresse pro Regel- und/oder Steuervorrichtung 13 bis 16 für die Zusatzmodule 12 vergeben wird. Es ist jedoch möglich, daß die bei den an die Regel- und/oder Steuervorrichtungen 13 bis 16 angeschlossenen Zusatzmodule 12 gleiche Adressen bestehen können, wenn gewährleistet ist, daß diese Zusatzmodule 12 nicht an der selben Regel- und/oder Steuervorrichtung 13 bis 16 angeschlossen sind.

Durch das Initialisieren der einzelnen Regel- und/oder Steuervorrichtungen 13 bis 16 und der Zusatzmodule 12 kann der Server 3 eine Art Karte vom Datenkommunikationssystem 1 konstruieren, sodaß der Server 3 jederzeit weiß, wie viele Regel- und/oder Steuervorrichtungen 13 bis 16 und der Zusatzmodule 12 im Datenkommunikationssystem 1 angeordnet sind.

Nachdem alle logischen Adressen vom Server 3 bzw. von der Regel- und/oder Steuervorrichtung 13 bis 16 für die Zusatzmodule 12 vergeben wurden bzw. nach der Aktivierung der Regel- und/oder Steuervorrichtung 13 bis 16, wird von der Regel- und/oder Steuervorrichtung 13 bis 16 ein Betriebssystem von einem nicht flüchtigem Speicher in die Rechnereinheit, also in den Mikroprozessor, geladen, d.h., daß für die Abarbeitung für die einzelnen Softwarepakete bzw. die Regelung und Steuerung der einzelnen Zusatzmodule 12 ein Betriebssystem vorhanden sein muß. Dieses Betriebssystem kann nunmehr in der Hardwareebene der Regel- und/oder Steuervorrichtung 13 bis 16 angeordnet sein. Selbstverständlich ist es möglich, daß beispielsweise das Betriebssystem vom Server 3 an die einzelnen Regel- und/oder Steuervorrichtungen 13 bis 16 übersandt wird bzw. von dem Server 3 abgewartet werden kann.

Um jedoch das Datenkommunikationssystem 1 einsetzen zu können, müssen für die entsprechenden Zusatzmodule 12 noch die entsprechenden Anwendungsprogramme 24 auf den Regel- und/oder Steuervorrichtungen 13 bis 16 installiert werden. Die Anwendungsprogramme 24 werden dabei von den einzelnen Regel- und/oder Steuervorrichtungen 13 bis 16 in einem Speicher hinterlegt, sodaß diese jederzeit die Anwendungsprogramme 24 aufrufen und verarbeiten können, ohne daß dabei das Ringnetzwerk 9 belastet werden muß.

Die gesamten Anwendungsprogamme 24 sind dabei im Server 3 hinterlegt und werden bei Aufforderung von einer Regel- und/oder Steuervorrichtung 13 bis 16 an diese übersandt. Dabei ist es notwendig, daß für jedes Zusatzmodul 12, beispielsweise ein eigenes Kommunikationsmodul 25 am Server 3, installiert werden muß, damit eine Steuerung der Zusatzmodule 12 möglich ist, d.h., daß beispielsweise bei einem Einsatz einer Zutrittskontrolle mit einem Kartenlesegerät ein Kommunikationsmodul 25 für ein derartiges Zusatzmodul 12 an der entsprechenden Regel- und/oder Steuervorrichtung 13 bis 16 installiert werden muß, damit ein Anwendungsprogramm 24 dieses Zusatzmoduls 12 benutzen kann und somit den Zugang für die entsprechende Person gewähren bzw. verweigern kann.

Die einzelnen Anwendungsprogramme 24 werden dabei ebenfalls im Server 3 hinterlegt, sodaß bei Benötigung eines Anwendungsprogrammes 24 dieses an die entsprechende Regel- und/oder Steuervorrichtung 13 bis 16 übersandt werden kann. Selbstverständlich ist es möglich, daß beispielsweise ein Anwendungsprogramm 24 auf mehrere Kommunikationsmodule 25 für mehrere Zusatzmodule 12 bzw. daß mehrere Anwendungsprogramme 24 auf ein Kommunikationsmodul 25 für ein Zusatzmodul 12 zugreifen können. Dies hat den Vorteil, daß dadurch sämtliche Anwendungsprogramme 24 sämtliche Zusatzmodule 12 indirekt über die Kommunikationsmodule 25 ansteuern können, sodaß ein multifunktionales Datenkommunikationssystem 1 aufgebaut werden kann.

Der Ablauf eines zu steuernden Zusatzmoduls 12 erfolgt dabei über das Kommunikationsmodul 25. Das Kommunikationsmodul 25 hat die Aufgabe, eine softwaremäßige Schnittstelle zwischen dem Anwendungsprogramm 24 und der Hardware der Regel- und/oder Steuervorrichtung 13 bis 16 bzw. des Zusatzmoduls 12 zu schaffen. Dazu wird bei einer Installation eines Zusatzmoduls 12 vom Server 3 ein entsprechendes Kommunikationsmodul 25 geschaffen, das anschließend an die entsprechende Regel- und/oder Steuervorrichtung 13 bis 16 übersandt wird, d.h., daß die unterste Ebene der Regel- und/oder Steuervorrichtung 13 bis 16 durch die Hardware und das Betriebssystem für die Rechnereinheit, insbesondere den Mikroprozessor, der Regel- und/oder Steuervorrichtung 13 bis 16 gebildet wird, wobei die darüberliegenden Ebenen durch Softwarepakete insbesondere dem Kommunikationsmodul 25 und dem Anwendungsprogramm 24, gebildet wird.

Durch die Anordnung des Kommunikationsmoduls 25 wird erreicht, daß dadurch das Anwendungsprogramm 24 keinen direkten Zugriff auf die Hardware des Zusatzmoduls 12 hat, d.h., daß das Anwendungsprogramm 24 nicht weiß, ob das Zusatzmodul 12 direkt an die Regel- und/oder Steuervorrichtung 13 bis 16 oder überhaupt ein Zusatzmodul 12 angeschlossen ist, oder ob das Zusatzmodul 12 auf einer anderen Regel- und/ oder Steuervorrichtung 13 bis 16 angeschlossen ist. Wird beispielsweise von einem Zusatzmodul 12 ein Ein/Ausgabe-Befehl durchgeführt, so leitet das Kommunikationsmodul 25 diesen Befehl über einen Mechanismus an das entsprechende Anwendungsprogramm 24 bzw. das Ergebnis an das zugeordnete Zusatzmodul 12 weiter. Dabei ist es möglich, daß das zugeordnete Anwendungsprogramm 24 bzw. das Zusatzmodul 12 irgendwo im Datenkommunikationssystem 1, also irgendwo an einer Regel- und/oder Steuervorrichtungen 13 bis 16, angeordnet ist. Das Zusatzmodul 12 bzw. das Anwendungsprogramm 24 weiß nicht, an welcher Regel- und/oder Steuervorrichtung 13 bis 16 es angeschlossen bzw. wo es installiert ist. Die Zuordnung der Daten bzw. der zu steuernden Ein/Ausgänge der Zusatzmodule 12 werden nämlich durch in das Kommunikationsmodul 25 geschriebene Zuordnungen, insbesondere durch entsprechende Adressen, gesteuert. Es kann nun gesagt werden, daß für jedes Zusatzmodul 12 vom Server 3 ein eigenes Kommunikationsmodul 25 erstellt wird.

Dies ist von Vorteil, da dadurch ein Anwendungsprogramm 24 für mehrere Zusatzmodule 12 eingesetzt werden kann, da das Kommunikationsmodul 25 bei Aktivierung eines Zusatzmoduls 12 das entsprechende Anwendungsprogramm 24 aufruft. Die Festlegung, ob ein eigens Anwendungsprogramm 24 an der Regel- und/oder Steuervorrichtung 13 bis 16 installiert werden muß, wird vom Server 3 bzw. von einem Benutzer über einen Softwarezugriff bei der Installation festgelegt.

Die Regel- und/oder Steuervorrichtungen 13 bis 16 können für jedes Zusatzmodul 12 gewisse Einstellungen bzw. Daten speichern. Dazu gehört beispielsweise die Türöffnungszeit einer Zutrittskontrolle oder die Kalibrierung einer Temperaturregelung. Damit diese Informationen den Anwendungsprogrammen 24 in den Regel- und/oder Steuervorrichtungen 13 bis 16 dauerhaft zur Verfügung stehen, sind die einzelnen Einstellungen und Daten für jede Regel- und/oder Steuervorrichtung 13 bis 16 im Server 3 hinterlegt. Die Anwendungsprogramme 24 bzw. die Regel- und/oder Steuervorrichtungen 13 bis 16 können jederzeit die aktuellen Einstellungen vom Server 3 anfordern. Fällt das Datenkommunikationssystem 1 durch einen Fehler, z.B. durch einen Stromausfall, aus, können trotzdem alle Daten wiederhergestellt werden, da die Einstellungen in einem Massenspeicher, beispielsweise in einer Festplatte, abgespeichert werden. Die Anwendungsprogramme 24 bzw. die Regel- und/oder Steuervorrichtungen 13 bis 16 müssen die entsprechenden Einstellungen bzw. Daten sofort nach dem Start vom Server 3 anfordern.

Durch den Aufbau des Ablaufes der Steuerung der einzelnen Regel-und/oder Steuervorrichtungen 13 bis 16 auf mehreren Ebenen, insbesondere auf drei Ebenen, kann nun gesagt werden, daß das Kommunikationsmodul 25 die Plattform für die verschiedenen Anwendungsprogramme 24 bildet und somit die Integration in das Datenkommunikationssystem 1 übernimmt. Die Anwendungsprogramme 24 kommen dabei nicht mit der Komplexität des Datenkommunikationssystems 1 in Berührung, sodaß eine einfache Wartung der Anwendungsprogramme 24 möglich ist.

Damit nunmehr ein Datenaustausch zwischen den einzelnen Regel- und/oder Steuervorrichtungen 13 bis 16 über die Schnittstellen 22, 23 durchgeführt werden kann, müssen sich die einzelnen Regel- und/oder Steuervorrichtungen 13 bis 16 an ein einheitliches Übertragungsprotokoll halten, d.h., daß jede Regel- und/oder Steuervorrichtung 13 bis 16 beim Aussenden eines Datenpaketes an eine weitere Regel- und/oder Steuervorrichtung 13 bis 16 einen bestimmten Dateninhalt aufweisen muß. Dabei ist es beispielsweise möglich, daß der Aufbau des Übertragungsprotokolls folgendermaßen durchgeführt werden kann.

Der Aufbau des Übertragungsprotokolls wird durch das Verwenden eines seriellen Netzbusses 8 durch hintereinander angeordnete Bytes durchgeführt. Dabei wird das erste Byte als Synchronisationsbyte verwendet, d.h., daß jedes Datenpaket immer mit dem selben Byte beginnen muß, sodaß alle Regel- und/oder Steuervorrichtungen 13 bis 16 bzw. die Schnittstellen 22, 23 erkennen können, daß ein Datenpaket an dem Netzbus 8 angelegt wurde. Anschließend können beispielsweise mehrere Bytes für die Synchronisation bzw. für diverse Prüfcodes angeschlossen werden. Nach den Synchronisationsbytes bzw. dem Prüfcode muß jede Regel- und/oder Steuervorrichtung 13 bis 16 eine Empfangsadresse, also jene Adresse, für die das Datenpaket bestimmt ist, an diese Bytes anfügen. Dabei ist es möglich, daß bei Aussendung eines Datenpaketes für mehrere Regel- und/oder Steuervorrichtungen 13 bis 16 übergeordnete Empfangsadressen festgelegt werden können. Dies hat den Vorteil, daß dadurch ein Datenpaket für mehrere Regel- und/oder Steuervorrichtungen 13 bis 16 verwendet werden kann. Dabei ist es selbstverständlich möglich, daß die einzelnen Regel- und/oder Steuervorrichtungen 13 bis 16 in einzelne Zonen eingeteilt werden, sodaß zonenbezogene Datenpakete ausgesandt werden.

An die Empfangsadresse muß jede Regel- und/oder Steuervorrichtung 13 bis 16 eine Sendeadresse, insbesondere seine eigene Adresse, bekannt geben, sodaß bei Rückantwort der weiteren Regel- und/oder Steuervorrichtung 13 bis 16 diese den Absender des Datenpaketes feststellen kann. An die Sendeadresse wird anschließend ein Zeitcode beigefügt, sodaß mit Hilfe dieses Zeitcodes und der Sendeadresse das Datenpaket immer eindeutig zugeordnet werden kann.

Dieser Zeitcode ist insofern von Vorteil, da dadurch der Server 3 beim Umlauf eines Datenpaketes feststellen kann, wie lange dieses Datenpaket bereits den Netzbus 8 belegt. Anschließend an den Zeitcode ist es möglich, daß beispielsweise ein Byte des Datenpaktes verwendet werden kann, indem die weitere Regel- und/oder Steuervorrichtung 13 bis 16 aufgefordert wird, beim Erhalt des Datenpaketes ein Antwortpaket zurückzusenden, sodaß die Regel- und/oder Steuervorrichtung 13 bis 16, die das Datenpaket ausgesendet hat, eine Bestätigung erhält, daß das Datenpaket an der richtigen Stelle angekommen ist. Daran anschließend können von den Regel- und/oder Steuervorrichtungen 13 bis 16 diverse Daten in das Datenpaket eingesetzt werden.

Durch den speziellen Aufbau des Übertragungsprotokolles wird gewährleistet, daß jedes Datenpaket, das sich im Netzbus 8 befindet, von jeder Regel- und/oder Steuervorrichtung 13 bis 16 gelesen werden kann. Selbstverständlich ist es möglich, daß der Byteaufbau für das Übertagungsprotokoll beliebig verändert werden kann, wobei darauf geachtet werden muß, daß dabei alle Regel- und/oder Steuervorrichtungen 13 bis 16 sowie die dazugehörigen Schnittstellen 22, 23 auf das neue Übertragungsprotokoll abgestimmt werden müssen.

Bei einem Datenaustausch zwischen zwei Regel- und/oder Steuervorrichtungen 13 bis 16, also beim Aussenden eines Datenpaketes an den Netzbus 8, wird von der Regel- und/oder Steuervorrichtung 13 bis 16, also von deren Schnittstelle 22, 23, nicht immer das gesamte Datenpaket ausgewertet, sondern wird zuerst die Empfangsadresse von den Schnittstellen 22, 23 gelesen, sodaß bei nicht Übereinstimmung der Adresse bzw. der Empfangsadresse mit der für diese Regel- und/oder Steuervorrichtung 13 bis 16 zugeordneten Adresse eine sofortige Weiterleitung über die weitere Schnittstelle 22 bzw. 23 von der Regel- und/oder Steuervorrichtung 13 bis 16 durchgeführt werden kann und somit für die Datenübertragung zwischen den einzelnen Regel- und/oder Steuervorrichtungen 13 bis 16 die Zeit bzw. die Belegungsdauer des Netzbusses 8 möglichst gering gehalten wird. Stimmt jedoch die Empfangsadresse mit der Adresse der Regel- und/ oder Steuervorrichtung 13 bis 16 überein, so werden sämtliche Bytes, die für das übertragungsprotokoll festgelegt sind, von den Schnittstellen 22, 23 bzw. von der für die Auswertung benötigten Software von der Regel- und/oder Steuervorrichtung 13 bis 16 durchgeführt.

Damit auf dem Datenkommunikationssystem 1 eine einheitliche Systemzeit vorhanden ist, müssen die einzelnen Regel- und/oder Steuervorrichtungen 13 bis 16 aufeinander abgestimmt werden. Dazu wird vom Server 3 nach der Inbetriebnahme des Datenkommunikationssystems 1 bzw. in voreinstellbaren Zeitabständen ein Datenpaket zur Zeitsynchronisation ausgesandt. Dieses Datenpaket enthält eine übergeordnete Empfangsadresse, sodaß jede Regel- und/oder Steuervorrichtung 13 bis 16 erkennen kann, daß dieses Datenpaket an die weitere Regel- und/oder Steuervorrichtung 13 bis 16 weitergeleitet werden muß. Um jedoch keine gegenseitige Beeinflussung der Weiterleitung des Datenpaketes zu erhalten, wird vom Server 3 eine bevorzugte Datenübertragungsrichtung für das Ringnetzwerk 9 festgelegt. Durch die übergeordnete Empfangsadresse werden die einzelnen Regel- und/oder Steuervorrichtungen 13 bis 16 aufgefordert, dieses Datenpaket an der weiteren Schnittstelle 22, 23 wieder an die weitere Regel- und/oder Steuervorrichtung 13 bis 16 auszusenden, sodaß ein doppelter Umlauf dieses Datenpaketes verhindert wird. Dieses Datenpaket für die Zeitsynchronisation beinhaltet beispielsweise die aktuelle Uhrzeit und eine berechnete Verzögerungszeit für die Weiterleitung an eine weitere Regel- und/oder Steuervorrichtung 13 bis 16. Wird dieses Datenpaket von einer Regel- und/oder Steuervorrichtung 13 bis 16 empfangen, so muß die Regel- und/oder Steuervorrichtung 13 bis 16, die in dem Datenpaket enthaltene Sollzeit, also die Uhrzeit, in einen entsprechenden Speicher speichern und anschließend ein neues Datenpaket mit dieser Sollzeit und der Verzögerungszeit für die Weiterleitung an die nächste Regel- und/oder Steuervorrichtung 13 bis 16 aussenden. Dieser Vorgang wird so lange wiederholt, bis das Datenpaket am Server 3 eingelangt ist, wodurch die gesamten Regel- und/oder Steuervorrichtungen 13 bis 16 über die Sollzeit aufeinander abgestimmt sind.

Um jedoch die Verzögerungszeit vom Server 3 feststellen zu können, sendet der Server 3 in bestimmten Abständen mehrere, beispielsweise alle fünf Minuten, ein solches Datenpaket aus. Der Server 3 speichert dabei die Sendezeit, zu welcher er dieses Datenpaket an das Ringnetzwerk 9 anlegt. Weiters wird nach Erhalt dieses Datenpaketes, also nach Umlauf um das Ringnetzwerk 9, die Empfangszeit des Datenpaketes vom Server 3 wiederum gespeichert, sodaß durch die Bildung der Differenz der beiden Zeiten sowie durch das Dividieren der Anzahl der im Ringnetzwerk 9 angeordneten Regel- und/oder Steuervorrichtungen 13 bis 16 ein Durchschnitt für die Übertragungsdauer zwischen zwei Regel- und/oder Steuervorrichtungen 13 bis 16 errechnet werden kann, wobei dieser Durchschnitt bei dem nächsten Datenpaket für die Zeitsynchronisation für die Verzögerungszeit eingesetzt wird, sodaß eine ständige Optimierung bei der Zeitsynchronisation der einzelnen Regel- und/oder Steuervorrichtungen 13 bis 16 durchgeführt werden kann.

Selbstverständlich ist es möglich, daß für die Zeitsynchronisation der einzelnen Regel- und/oder Steuervorrichtungen 13 bis 16 nur ein Datenpaket für die Zeitsynchronisation mit der Uhrzeit des Servers 3 an die einzelnen Regel- und/oder Steuervorrichtungen 13 bis 16 übersandt wird, da durch die schnelle Laufzeit bzw. Übertragungszeit des Netzbusses 8 die Verzögerungszeit, die durch die Trennvorrichtung in den einzelnen Regel- und/oder Steuervorrichtungen 13 bis 16 entsteht, so gering ist, daß diese nicht berücksichtigt werden muß. Dies hat den Vorteil, daß dadurch ein einfacherer Aufbau der Zeitsynchronisation für die einzelnen Regel- und/oder Steuervorrichtungen 13 bis 16 erzielt wird.

Nachstehend werden einige Anwendungsgebiete bzw. Anwendungsprogramme 24 und Zusatzmodule 12 des Datenkommunikationssystems 1 beschrieben.

Dabei ist es möglich, daß am Server 3 ein Personenverwaltungsprogramm sowie ein Controllcenter für das gesamte Datenkommunikationssystem 1 installiert ist. Das Personenverwaltungsprogramm kann die Basis für alle Anwendungen mit personenbezogenen Daten zu Grunde legen, d.h. daß beispielsweise für ein Zutrittskontrollsystem oder für ein Zeiterfassungssystem auf dieses Personenverwaltungsprogramm bzw. auf die Daten zurückgegriffen werden kann. Dabei werden die Daten der einzelnen Personen, die sich im Gebäude 2 bewegen, in einer zentralen Datenbank am Server 3 gespeichert. Die Regel- und/oder Steuervorrichtungen 13 bis 16 können dabei bei Anordnung eines Zusatzmoduls 12 mit einem Zutrittskontrollsystem über das Ringnetzwerk 9 auf diese Daten zugreifen und somit die entsprechenden Personen identifizieren. Durch dieses Personenverwaltungsprogramm ist es möglich, daß jederzeit festgestellt werden kann, in welchem Raum 6, 7 sich die Person befindet, bzw. zu welchem Zeitpunkt die Person in irgendeinem Raum 6, 7 sich aufgehalten hat. Selbstverständlich ist es möglich, daß die Daten des Personenverwaltungsprogrammes auf der Regel- und/oder Steuervorrichtung 13 bis 16 gespeichert sein können.

Das Controllcenter hat die Aufgabe, die Daten von den einzelnen Regel- und/oder Steuervorrichtungen 13 bis 16 zu visualisieren, d.h., daß eine Darstellung beispielsweise eines Gebäudeplans oder einer Anzeigetafel an einem Bildschirm am Server 3 geschaffen wird, aus dem die einzeln angeordneten Zusatzmodule 12 bzw. die einzelnen Regel- und/oder Steuervorrichtungen 13 bis 16 eingetragen sind. Gleichzeitig ist es möglich, im Zusammenspiel mit dem Personenverwaltungsprogramm die entsprechenden Personen in den einzelnen Räumen 6, 7 des Gebäudes 2 einzuzeichnen bzw. am Bildschirm des Servers 3 darzustellen. Grundsätzlich muß gesagt werden, daß der Server 3 mit weiteren, über die LAN/WAN-Schnittstelle verbundenen Computer, also weiteren Personalcomputer, verbunden werden kann, wobei die einzelnen Programme auf irgendeinem beliebigen Computer installiert sein können. Der Zugriff auf die einzelnen Regel- und/oder Steuervorrichtungen 13 bis 16 bzw. auf die Zusatzmodule 12 erfolgt über den Server 3. Dabei ist es auch möglich, daß beispielsweise über ein Notebook und ein Modem extern, also über eine Telefonleitung, auf den Server 3 zugegriffen werden kann, sodaß wiederum ein Zugriff zu den einzelnen Regel- und/oder Steuervorrichtungen 13 bis 16 sowie zu den einzelnen Zusatzmodulen 12 möglich ist.

Ein Anwendungsprogramm 24 kann beispielsweise als Zutrittskontrollsystem an der Regel- und/oder Steuervorrichtung 13 bis 16 installiert werden. Dabei wird ein zum Stand der Technik zählendes Zutrittskontrollsystem, beispielsweise ein Magnetkartenleser oder ein Chipleser im Bereich einer Tür bzw. eines Einganges eines Raumes 6, 7, angeordnet. Der Magnetkartenleser bzw. der Chipkartenleser ist dabei über den Lokalbus 11 mit einer der Regel- und/oder Steuervorrichtungen 13 bis 16 verbunden. Wird von einem Benutzer eine Magnetkarte bzw. eine Chipkarte in den Magnetkartenleser bzw. in den Chipkartenleser eingesteckt, so aktiviert der Magnetkartenleser über den Lokalbus 11 die entsprechende Regel- und/oder Steuervorrichtung 13 bis 16, wodurch nunmehr vom Kommunikationsmodul 25 das entsprechende Anwendungsprogramm 24 aktiviert wird und die vom Magnetkartenleser übergebenen Daten vom Kommunikationsmodul 25 an das Anwendungsprogramm 24 weitergeleitet werden. Das Anwendungsprogramm 24 überprüft nun, ob die eingesteckte Magnetkarte bzw. Chipkarte eine Berechtigung für den Raum 6, 7 aufweist.

Dies kann insofern geschehen, daß das Anwendungsprogramm 24 bzw. die entsprechende Regel- und/oder Steuervorrichtung 13 bis 16 über das Ringnetzwerk 9 ein Datenpaket in Form des zuvor beschriebenen Übertragungsprotokolls an den Server 3 weiterleitet, sodaß dieser in seinem Personenverwaltungsprogramm überprüft, ob die entsprechende Person mit der Magnetkarte einen Zugriff auf den entsprechenden Raum 6, 7 hat. Ist dies der Fall, so sendet der Server 3 ein Antwortpaket an die entsprechende Regel- und/oder Steuervorrichtung 13 bis 16, indem der Regel- und/oder Steuervorrichtung 13 bis 16 mitgeteilt wird, daß die entsprechende Person eine Berechtigung bzw. keine Berechtigung für diesen Raum 6, 7 hat. Daraufhin wird vom Anwendungsprogramm 24 ein entsprechender Befehl zur Aktivierung eines Türöffners an das Kommunikationsmodul 25 weitergeleitet. Das Kommunikationsmodul 25 steuert nunmehr den entsprechenden Ausgang für den Türöffner an, sodaß die Person, die für den Raum 6, 7 Zutritt erlangen möchten, in den Raum 6, 7 eintreten kann.

Bei dieser Ausführungsform ist es beispielsweise möglich, daß mehrere Zutrittskontrollsysteme für die verschiedenen Regel- und/oder Steuervorrichtungen 13 bis 16 angeordnet sind, wobei der Server 3 das entsprechende Anwendungsprogramm 24 für das Zutrittskontrollsystem an nur einer Regel- und/oder Steuervorrichtung 13 bis 16 installiert hat. Die Kommunikation zwischen der Hardware und dem entsprechenden Anwendungsprogramm 24 wird durch das Kommunikationsmodul 25 durchgeführt, d.h., daß bei Aufruf eines Zutrittskontrollsystems, also bei Aktivierung durch Einstecken einer Magnetkarte, ein entsprechender Eingang bzw. mehrere Eingänge an einer beliebigen Regel- und/oder Steuervorrichtung 13 bis 16 aktiviert werden. Das Kommunikationsmodul 25 weis nunmehr, auf welcher Regel- und/oder Steuervorrichtung 13 bis 16 das entsprechende Anwendungsprogramm 24 installiert ist, sodaß das Kommunikationsmodul 25 über die Schnittstelle 22, 23 einen Kontakt zu der entsprechenden Regel- und/oder Steuervorrichtung 13 bis 16 bzw. zu dem in der Regel- und/oder Steuervorrichtung 13 bis 16 installierten Anwendungsprogramm 24 aufnehmen kann. Dabei wird bei dem Übertragungsprotokoll das Byte für die Rückantwort aktiviert, sodaß das Anwendungsprogramm 24 durch Umdrehen der Empfangs- und Sendeadressen ein entsprechendes Antwortpaket an das Kommunikationsmodul 25 senden kann, indem dem Kommunikationsmodul 25 mitgeteilt wird, ob die entsprechende Person Zutritt zu dem Raum 6, 7 hat.

Bei einer Anordnung eines Zutrittskontrollsystems muß darauf geachtet werden, daß ein bestimmter Ausgang der Hardware, also der Regel- und/oder Steuervorrichtung 13 bis 16 bzw. eines Zusatzmoduls 12, also jener Ausgang, an dem der Türöffner angeschlossen ist, über eine längere Zeitdauer angesteuert werden muß, damit einer Person, die Zutritt zu dem Raum 6, 7 haben möchte, eine gewisse Zeitspanne zum Öffnen der Tür zur Verfügung steht. Dabei wird von dem Kommunikationsmodul 25 bzw. vom Anwendungsprogramm 24 ein weiteres Unterprogramm aufgerufen, das bewirkt, daß dieser Ausgang, also jener Ausgang, an dem der Türöffner angeschlossen ist, über eine voreinstellbare Zeitdauer aktiviert bleibt.

Weiters ist es auch möglich, daß die Zugriffsberechtigung für ein derartiges Zutrittskontrollsystem über externe Datenbanken vergeben wird. Dabei wird vom Server 3 über die LAN/WAN-Schnittstelle mit einem entsprechenden Hostcomputer, beispielsweise einem Bankcomputer, entweder direkt oder über ein Modem Kontakt aufgenommen, sodaß die in diesen externen Datenbanken hinterlegten Zutrittsberechtigungen abgefragt werden können und anschließend vom Server 3 über ein Datenpaket an das entsprechende Anwendungsprogramm 24 weitergeleitet werden.

Die Identifizierung bzw. das Überwachen von Personen im Gebäude 2 kann auch durch Infrarotsender bzw. Bewegungsmelder durchgeführt werden. Selbstverständlich ist es auch möglich, daß die im Gebäude 2 befindlichen Personen eine Sendevorrichtung bei sich tragen, sodaß durch Anordnung von einem Zusatzmodul 12 in Form einer Empfangsvorrichtung diese Personen jederzeit lokalisiert werden können.

Ein weiteres Zusatzmodul 12 kann beispielsweise für eine Temperaturregelung eines Raums 6 bzw. 7 an einer Regel- und/oder Steuervorrichtung 13 bis 16 angeordnet sein. Die Temperaturregelung des Raums 6 bzw. 7 erfolgt dabei über einen Temperatursensor, d.h., daß die Raumtemperatur über ein Zusatzmodul 12, beispielsweise einem Temperatursensor, gemessen wird und entsprechend ein digitaler bzw. analoger Wert über das Kommunikationsmodul 25 an das Anwendungsprogramm 24 weitergeleitet wird. Bei einer derartigen Temperaturregelung eines Raums 6 bzw. 7 ist es möglich, daß mehrere unterschiedliche Anwendungsprogramme 24 von dem für die Temperaturregelung zugeordneten Anwendungsprogramm 24 aktiviert werden, d.h., daß beispielsweise bei zu hoher Temperatur das Anwendungsprogramm 24 für die Temperaturregelung ein Anwendungsprogramm 24 für die Heizungssteuerung aktiviert und entsprechende Daten für die Abschaltung bzw. Reduzierung der Heizleistung übergibt. Dabei ist es möglich, daß dieses Anwendungsprogramm 24 für die Heizungssteuerung auf einer anderen Regel- und/oder Steuervorrichtung 13 bis 16 angeordnet ist und das Anwendungsprogramm 24 für die Temperaturregelung über die entsprechenden Schnittstellen 22, 23 mit dem Anwendungsprogramm 24 für die Heizungsregelung über das Ringnetzwerk 9 Kontakt aufnimmt und somit das Anwendungsprogramm 24 für die Heizungsregelung aktiviert. Selbstverständlich ist es möglich, daß jedes Anwendungsprogramm 24 mit jedem beliebigen Anwendungsprogramm 24 Kontakt aufnehmen kann, sodaß ein multifunktionales Datenkommunikationssystem 1 geschaffen wird.

Bei einer derartigen Temperaturregelung ist es selbstverständlich möglich, daß verschiedene Steuerroutinen durchgeführt werden können. Dabei ist es beispielsweise möglich, daß ein Wochenprogramm für die Regelung der Heizung bzw. die Regelung der Raumtemperatur eines Raumes 6 bzw. 7 hinterlegt sein kann. Weiters ist es auch möglich, daß eine Nachtabsenkung für die Heizung über die Temperaturregelung durchgeführt werden kann. Um die zuvor genannten Steuerungen durchführen zu können, ist es beispielsweise möglich, daß entsprechende Softwareprogramme am Server 3 installiert werden, die automatisch zu bestimmten Zeitpunkten mit der entsprechenden Regel- und/oder Steuervorrichtung 13 bis 16 Kontakt aufnehmen und entsprechende Daten für das Anwendungsprogramm 24 übermitteln, sodaß der entsprechende Vorgang für die Regelung des Raumes 6 bzw. 7 bzw. für die Regelung der Heizung durchgeführt werden können. Selbstverständlich ist es auch möglich, daß die entsprechenden Softwareprogramme auch auf der Regel- und/oder Steuervorrichtung 13 bis 16 installiert sind, sodaß eine Belastung des Ringnetzwerkes 9 vermieden wird.

Weiters ist es möglich, daß das Datenkommunikationssystem 1 für ein Objektverfolgungssystem eingesetzt werden kann, wie dies beispielsweise in einem Kaufhaus für die unterschiedlichsten Waren verwendet werden kann. Dabei weisen die einzelnen Waren eine Sendevorrichtung auf. Die Zusatzmodule 12 werden dabei aus einzelnen Empfangsvorrichtungen für die Sendevorrichtungen gebildet, sodaß bei Vorbeibewegung einer Ware die entsprechende Empfangsvorrichtung aktiviert wird, die wiederum über das Kommunikationsmodul 25 ein entsprechendes Anwendungsprogramm 24 aktiviert. Bei einem derartigen Objektverfolgungssystem werden die einzelnen Daten, die von den Empfangsvorrichtungen an den Anwendungsprogrammen 24 weitergeleitet werden, über das Ringnetzwerk 9 an den Server 3 weitergeleitet, sodaß dieser eine Visualisierung der Daten durchführen kann und somit ein entsprechender Standort bzw. ein Weg für die einzelnen Waren rekonstruiert werden kann. Bei einem derartigen System ist es beispielsweise möglich, daß für jede Regel- und/oder Steuervorrichtung 13 bis 16 ein entsprechendes Anwendungsprogramm 24 installiert ist, sodaß die Belastung des Netzbusses 8 durch den Datenaustausch zwischen den einzelnen Regel- und/oder Steuervorrichtungen 13 bis 16 bzw. mit dem Server 3 möglichst gering gehalten werden kann. Dabei ist es auch möglich, daß gewisse Daten über einen längeren Zeitraum an den einzelnen Regel- und/oder Steuervorrichtungen 13 bis 16 gespeichert werden und diese erst zu bestimmten Zeitpunkten die gesammelten Daten über den Netzbus 8 an den Server 3 weitergeleitet werden. Durch entsprechende Softwarepakete ist es möglich, daß durch den Server 3 eine entsprechende Auswertung der Daten durchgeführt wird, sodaß ein bestimmter Warenverkehr in einem Kaufhaus festgestellt werden kann, bzw. daß die Lagerhalterung bei Koppelung des Objektverfolgungssystems mit einem Lagerverwaltungsprogramm automatisiert werden kann. Die Sendevorrichtung und die Empfangsvorrichtung werden bei einem derartigen System so ausgebildet, daß diese nur eine gewisse Reichweite aufweisen, sodaß eine Überschneidung mit den weiteren Sendevorrichtungen bzw. Empfangsvorrichtungen vermieden wird.

Weiters ist es möglich, daß beispielsweise ein Zusatzmodul 12 in Form eines Anzeige- und/oder Steuergerätes verwendet wird, mit der drahtlos auf das Datenkommunikationssystem 1 zugegriffen werden kann, wobei dabei in jedem Raum 6, 7 bzw. in verschiedenen Zonen des Gebäudes 2 entsprechende Empfangsvorrichtungen, also Zusatzmodule 12, die das Signal der Anzeige- und/oder Steuergeräte empfangen, angeordnet sind. Vorteilhaft ist dabei, daß dadurch eine Person sich im Gebäude 2 bewegen kann und gleichzeitig von jedem Raum 6, 7 auf das Datenkommunikationssystem 1 zugreifen kann.

Selbstverständlich ist es möglich, daß das Datenkommunikationssystem 1 für weitere Steuervorgänge, wie beispielsweise einer Rolladensteuerung, einer Brandmeldeanlage, einer Alarmanlage oder Jalousiensteuerungen sowie eine Fenstersteuerung usw., verwendet werden kann. Weiters ist es auch möglich, daß die Regel- und/oder Steuervorrichtung 13 bis 16 des Datenkommunikationssystems 1 zur Steuerung von Produktionsmaschinen, beispielsweise von Robotern, eingesetzt werden kann, wobei dabei die Zusatzmodule 12 die einzelnen Sensoren bzw. Geber an den Produktionsmaschinen bilden. Bei Verwendung oder Anordnung des Datenkommunikationssystems 1 für eine Alarmanlage bzw. für eine Brandmeldeanlage ist es möglich, daß beispielsweise der Server 3 bei Auslösung eines Alarms bzw. eines Brandalarmes automatisch eine entsprechende Warnzentrale über Telefon anwählt bzw. eine bestimmte Person von dem Server 3 über das Telefon kontaktiert wird.

Weiters ist es möglich, daß bei Zugriff von externen bzw. internen Computern über die LAN/WAN-Schnittstelle des Servers 3 eine entsprechende Zugriffslibrary am Server 3 installiert ist, d.h., daß nur bestimmte Personen auf das Datenkommunikationssystem 1 zugreifen können. Diese Zugriffslibrary kann beispielsweise im Server 3 angeordnet werden, sodaß beim sofortigen Einwählen eines externen bzw. internen Computers der Server 3 überprüfen kann, ob diese Person bzw. der Computer die entsprechende Berechtigung für das Datenkommunikationssystem 1 aufweist. Dabei ist es auch möglich, daß für jedes Anwendungsprogramm 24 eine eigene Berechtigung vergeben wird, wodurch erreicht wird, daß bestimmte Personen nur bestimmte Steuerfunktionen des Datenkommunikationssystems 1 durchführen können.

Die zuvor beschriebenen Anwendungsgebiete des Datenkommunikationssystems 1 können selbstverständlich alle auf einem Datenkommunikationssystem 1 angeordnet sein, bzw. es können verschiedene Kombinationen der zuvor beschriebenen Ausführungsbeispiele eingesetzt werden.

Das Datenkommunikationssystem 1 ist dabei beliebig erweiterbar, d.h., daß bei Anordnungen von Zusatzmodulen 12 immer wieder weitere Zusatzmodule 12 eingesetzt werden können. Dabei wird die Installation durch einfaches Anschließen bzw. durch Anordnung der entsprechenden Zusatzmodule 12 in den einzelnen Räumen 6, 7 erreicht. Die Initialisierung dieser Zusatzmodule 12 erfolgt dabei automatisch, d.h., daß durch Anschluß eines Zusatzmodules 12 an einer Regel- und/oder Steuervorrichtung 13 bis 16 diese den Server 3 darauf aufmerksam macht, daß ein entsprechendes Zusatzmodul 12 angeordnet ist. Der Server 3 bzw. die Regel- und/oder Steuervorrichtung 13 bis 16 vergibt dann anschließend wiederum für dieses Zusatzmodul 12 eine eigene Adresse und sendet über das Ringnetzwerk 9 das entsprechende Anwendungsprogramm 24 bzw. das Kommunikationsmodul 25 an die entsprechende Regel- und/oder Steuervorrichtung 13 bis 16. Ist jedoch der Server 3 der Auffassung, daß dieses Zusatzmodul 12 beispielsweise das Anwendungsprogramm 24, das auf einer anderen Regel- und/oder Steuervorrichtung 13 bis 16 installiert ist, verwenden soll, so sendet der Server 3 nur mehr das Kommunikationsmodul 25 an die entsprechende Regel- und/oder Steuervorrichtung 13 bis 16, sodaß über das Kommunikationsmodul 25 der Kontakt zu dem entsprechenden Anwendungsprogramm 24 hergestellt werden kann. Dies ist meist dann der Fall, wenn bestimmt Zusatzmodule 12 mehrmals im Gebäude 2 bzw. in zwei benachbarten Räumen 6, 7 angeordnet werden, da dadurch die Belegung des Netzbusses 8 durch einen Datenaustausch von zwei benachbarten Regel- und/oder Steuervorrichtungen 13 bis 16 einfach möglich ist, da durch die Punkt zu Punkt Verbindung der einzelnen Segmente 17 bis 21 eine Störung des gesamten Netzbusses 8 vermieden wird.

Es ist auch möglich, daß das Datenkommunikationssystem 1 für den Datenaustausch zwischen den Regel- und/oder Steuervorrichtungen 13 bis 16 und/oder dem Server 3 drahtlos erfolgen kann, d.h., daß dabei die Schnittstellen 22, 23 durch eine Sende- und Empfangsvorrichtung ersetzt werden. Es ist auch möglich, daß anstelle des Lokalbusses 11 der Datenaustausch zwischen den einzelnen Regel- und/oder Steuervorrichtungen 13 bis 16 und den Zusatzmodulen 12 ebenfalls drahtlos erfolgen kann, wobei dabei jede Regel- und/oder Steuervorrichtung 13 bis 16 sowie die einzelnen Zusatzmodule 12 jeweils eine Sende- und Empfangsvorrichtung aufweisen müssen.

Es ist auch möglich, daß die einzelnen Zusatzmodule 12 mit einer eigenen Intelligenz ausgestattet sein können. Dazu wird in jedem Zusatzmodul 12 beispielsweise ein Mikrocontroller oder ein Mikroprozessor angeordnet. Vorteilhaft ist dabei, daß die Auswertung der Ein- und Ausgänge der Zusatzmodule 12 von dem Mikroprozessor bzw. Mikrocontroller durchgeführt wird und nur mehr der Datenaustausch zwischen dem Zusatzmodul 12 und der Regel- und/oder Steuervorrichtung 13 bis 16 über den Lokalbus 11 bzw. drahtlos durchgeführt wird, sodaß erreicht wird, daß die Regel- und/ oder Steuervorrichtung 13 bis 16 nicht mehr so stark belastet wird.

Weiters ist es möglich, daß das Datenkommunikationssystem 1, insbesondere der Netzbus 8 sowie der Lokalbus 11, durch parallele Bussysteme aufgebaut werden kann. Bei einem Aufbau des Datenkommunikationssystems 1 mit den einzelnen parallelen Bussystemen würde ein schnellerer Datenaustausch zwischen den Regel- und/oder Steuervorrichtungen 13 bis 16 bzw. dem Server 3 und/oder dem Datenaustausch der Regel- und/oder Steuervorrichtung 13 bis 16 und den Zusatzmodulen 12 erreicht werden.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Es können auch einzelne Merkmale der einzelnen Ausführungsbeispiele mit anderen Einzelmerkmalen von anderen Ausführungsbeispielen oder jeweils für sich alleine den Gegenstand von eigenständigen Erfindungen bilden. Vor allem können die einzelnen in den Fig. 1; 2 und 3 gezeigten bzw. beschriebenen Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Datenkommunikationssystem
- 2: Gebäude
- 3: Server
- 4: Personalcomputer
- 5: Grundmodul

- 6: Raum
- 7: Raum
- 8: Netzbus
- 9: Ringnetzwerk
- 10: Leitung

- 11: Lokalbus
- 12: Zusatzmodul
- 13: Regel- und/oder Steuerungsvorrichtung
- 14: Regel- und/oder Steuerungsvorrichtung
- 15: Regel- und/oder Steuerungsvorrichtung

- 16: Regel- und/oder Steuerungsvorrichtung
- 17: Segment
- 18: Segment
- 19: Segment
- 20: Segment

- 21: Segment
- 22: Schnittstelle
- 23: Schnittstelle
- 24: Anwendungsprogramm
- 25: Kommunikationsmodul

## Patentansprüche

1. Regel- und/oder Steuervorrichtung (13 bis 16) für die Objektleittechnik mit einer Rechnereinheit, insbesondere einem Mikroprozessor, der über einen Lokalbus (11) mit mindestens einem Zusatzmodul (12) verbunden ist, wobei die Regel- und/oder Steuervorrichtung (13 bis 16) mehrere Schnittstellen (22,23) für einen Netzbus (8), insbesondere ein Ringnetzwerk (9), aufweist, über die diese Regel- und/oder Steuervorrichtung (13 bis 16) mit einem Server (3) und/oder zumindest einer weiteren Regel- und/oder Steuervorrichtung (13 bis 16) verbunden ist, dadurch gekennzeichnet, daß zwischen der Rechnereinheit und den Schnittstellen (22, 23) des Netzbusses (8) eine galvanische Trennvorrichtung angeordnet ist, wobei der Netzbus (8) durch die galvanisch getrennten Schnittstellen (22, 23) in einzelne Segmente (17 bis 21) aufgeteilt ist und daß ein Datenaustausch zweier benachbarter, insbesondere über ein Segment (17 bis 21) des Ringnetzwerkes (9) verbundener, Regel- und/oder Steuervorrichtung (13 bis 16) und/oder einer oder mehrerer weiterer im Ringnetzwerk (9) angeordneter Regel- und/oder Steuervorrichtungen in beiden Richtungen möglich ist, und daß in unterschiedlichen Segmenten (17 bis 21) ein Datenaustausch zwischen zwei mit diesen Segmenten (17 bis 21) unmittelbar verbundenen Regel- und/oder Steuervorrichtung (13 bis 16) gleichzeitig stattfinden kann.

2. Regel- und/oder Steuervorrichtung nach Anspruch 1, dadurch gekennzeichnet, daß die Regel- und/ oder Steuervorrichtung (13 bis 16) ein Kommunikationsmodul (25) oder -programm für jedes Zusatzmodul (12) umfaßt, das zur Steuerung der Schnittstellen (22, 23) des Netzbusses (8) und des Lokalbusses (11) und zur Verarbeitung der Eingangs- und/oder Ausgangssignale der Zusatzmodule (12) in der Rechnereinheit und/oder zur Weiterleitung dieser Signale an eine weitere Regel- und/oder Steuervorrichtung (13 bis 16) bzw. den Server (3) ausgebildet ist.

3. Regel- und/oder Steuervorrichtung nach Anspruch 1 oder 2, dadurch gekennzeichnet, daß der Netzbus (8) zur seriellen Datenübertragung zwischen der oder den Regel- und/oder Steuervorrichtung(en) (13 bis 16) und dem Server (3) ausgebildet ist.

4. Regel- und/oder Steuervorrichtung nach einem oder mehreren der vorhergehenden Ansprüche, dadurch gekennzeichnet, daß der Lokalbus (11) zur seriellen Datenübertragung zwischen der Regel- und/oder Steuervorrichtung (13 bis 16) und zumindest einem Zusatzmodul (12) ausgebildet ist.

5. Regel- und/oder Steuervorrichtung nach einem oder mehreren der vorhergehenden Ansprüche, dadurch gekennzeichnet, daß die galvanischen Trennvorrichtungen von der Rechnereinheit bzw. der Regel- und/oder Steuervorrichtung (13 bis 16) und/ oder einer weiteren Rechnereinheit bzw. der Regel- und/oder Steuervorrichtung (13 bis 16) und/oder dem Server (3) ansteuerbar sind.

6. Regel- und/oder Steuervorrichtung nach einem oder mehreren der vorhergehenden Ansprüche, dadurch gekennzeichnet, daß der Server (3) zumindest eine LAN/WAN-Schnittstelle aufweist.

7. Regel- und/oder Steuervorrichtung nach einem oder mehreren der vorhergehenden Ansprüche, dadurch gekennzeichnet, daß Parameter, wie beispielsweise die Baudrate, der Byteaufbau usw., für die Datenübertragung in jedem Segment oder in einer zusammenhängenden Gruppe von Segmenten (17 bis 21) des Netzbusses (8) unterschiedlich sind.

8. Regel- und/oder Steuervorrichtung nach einem oder mehreren der vorhergehenden Ansprüche, dadurch gekennzeichnet, daß das Kommunikationsmodul (25) eine software-gesteuerte Schnittstelle zwischen dem Anwendungsprogramm (24) und der Rechnereinheit der Regel- und/oder Steuervorrichtung (13 bis 16) bildet.

9. Regel- und/oder Steuervorrichtung nach einem oder mehreren der vorhergehenden Ansprüche, dadurch gekennzeichnet, daß ein Anwendungsprogramm (24) durch zumindest ein Kommunikationsmodul (25) einer Regel- und/oder Steuervorrichtung (13 bis 16) aktiviert ist.

10. Regel- und/oder Steuervorrichtung nach einem oder mehreren der vorhergehenden Ansprüche, dadurch gekennzeichnet, daß der Server (3) zur Vergabe einer Zuordnungsnummer, insbesondere einer Adresse, für jede Regel- und/oder Steuervorrichtung (13 bis 16) und beispielsweise für jedes Zusatzmodul (12) ausgebildet ist.

11. Datenkommunikationssystem für die Objektleittechnik bei dem mehrere Regel- und/oder Steuervorrichtungen nach einem der Ansprüche 1 bis 10 über einen Netzbus mit einem Server verbunden sind, dadurch gekennzeichnet, daß die Regel- und/oder Steuervorrichtung (13 bis 16) zumindest drei Steuerebenen aufweist, wobei diese durch ein Anwendungsprogramm (24), ein Kommunikationsmodul (25) und einer Hardware, in dem das Betriebssystem der Regel- und/oder Steuervorrichtung (13 bis 16) enthalten ist, gebildet sind.

12. Datenkommunikationssystem nach Anspruch 11, dadurch gekennzeichnet, daß jedem Raum (6, 7) eines Objekts, insbesondere eines Gebäudes (2), eine eigene Regel- und/oder Steuervorrichtung (13 bis 16) zugeordnet ist.

13. Datenkommunikationssystem nach Anspruch 11 oder 12, dadurch gekennzeichnet, daß je eine Regel- und/oder Steuervorrichtung (13 bis 16) einer aus mehreren Räumen (6, 7) eines Objekts bestehenden Zone zugeordnet ist.

14. Datenkommunikationssystem nach einem oder mehreren der vorhergehenden Ansprüche 11 bis 13, dadurch gekennzeichnet, daß die Regel- und/oder Steuervorrichtung (13 bis 16) und/oder der Server (3) über eine bevorzugt drahtlose Verbindungsvorrichtung mit den Zusatzmodulen (12), beispielsweise mit einem Anzeige- und/oder Steuergerät, verbunden ist.

15. Datenkommunikationssystem nach einem oder mehreren der vorhergehenden Ansprüche 11 bis 14, dadurch gekennzeichnet, daß die Regel- und/oder Steuervorrichtung (13 bis 16) zur Vergabe einer Zuordnungsnummer, insbesondere einer Adresse, für die Zusatzmodule (12) ausgebildet ist.

16. Datenkommunikationssystem nach einem oder mehreren der vorhergehenden Ansprüche 11 bis 15, dadurch gekennzeichnet, daß die Datenübertragung zwischen zumindest zwei Regel- und/oder Steuervorrichtungen (13 bis 16) und/oder dem Server (3) durch einzelne Datenpakete erfolgt.

17. Datenkommunikationssystem nach einem oder mehreren der vorhergehenden Ansprüche 11 bis 16, dadurch gekennzeichnet, daß das Datenpaket durch ein serielles Busprotokoll, insbesondere durch ein Übertragungsprotokoll, gebildet ist.

18. Datenkommunikationssystem nach einem oder mehreren der vorhergehenden Ansprüche 11 bis 17, dadurch gekennzeichnet, daß das Datenpaket durch hintereinander angeordnete Bytes besteht, wobei am Beginn des Datenpaktes ein Synchronisationsbyte angeordnet ist.

19. Datenkommunikationssystem nach einem oder mehreren der vorhergehenden Ansprüche 11 bis 18, dadurch gekennzeichnet, daß in jedem Datenpaket eine Empfangsadresse und eine Sendeadresse, die der Zuordnungsnummer, insbesondere der Adresse, der einzelnen Regel- und/oder Steuervorrichtungen (13 bis 16) entspricht, enthalten ist.

20. Datenkommunikationssystem nach einem oder mehreren der vorhergehenden Ansprüche 11 bis 19, dadurch gekennzeichnet, daß in jedem Datenpaket ein Zeitcode enthalten ist.

21. Datenkommunikationssystem nach einem oder mehreren der vorhergehenden Ansprüche 11 bis 20, dadurch gekennzeichnet, daß jedem Zusatzmodul (12) ein Kommunikationsmodul (25) zugeordnet ist.

22. Datenkommunikationssystem nach einem oder mehreren der vorhergehenden Ansprüche 11 bis 21, dadurch gekennzeichnet, daß alle Anwendungsprogramme (24) und alle Kommunikationsmodule (25) im Server (3) abgespeichert sind, wobei bei Anlage eines oder mehrerer Zusatzmodule (12) am Netzbus (8) diese über den Server (3) an eine und/oder mehrere Regel- und/oder Steuervorrichtungen (13 bis 16) zugeteilt sind.

## Claims

1. Closed and/or open-loop control device (13 to 16) for building management systems with a computer unit, in particular a microprocessor, which is connected by means of a local bus (11) with at least one additional module (12), the closed and/or open-loop control device (13 to 16) comprising several interfaces (22, 23) for a network bus (8), in particular a ring network (9), by means of which interfaces the closed and/or open-loop control device (13 to 16) is connected to a server (3) and/or at least one additional closed and/or open-loop control device (13 to 16), characterised in that between the computer unit and the interfaces (22, 23) of the network bus (8) a galvanic separating device is arranged, the network bus (8) being divided by the galvanically separated interfaces (22, 23) into individual segments (17 to 21), and in that data exchange is possible in both directions between two adjacent closed and/or open-loop control devices (13 to 16) connected in particular by a segment (17 to 21) of the ring network (9) and/or one or more further closed and/or open-loop control devices arranged in the ring network, and in that in different segments (17 to 21) data exchange can occur simultaneously between two closed and/or open-loop control devices (13 to 16) connected directly with these segments (17 to 21).

2. Closed and/or open-loop control device according to claim 1, characterised in that the closed and/or open-loop control device (13 to 16) comprises a communications module (25) or program for each additional module (12), which is designed to control the interfaces (22, 23) of the network bus (8) and the local bus (11) and to process the input and/or output signals of the additional module (12) in the computer unit and/or to forward said signals to a further closed and/or open-loop control device (13 to 16) or the server (3).

3. Closed and/or open-loop control device according to claim 1 or 2, characterised in that the network bus (8) is designed for the serial transfer of data between the closed and/or open-loop control device or devices (13 to 16) and the server (3).

4. Closed and/or open-loop control device according to one or more of the preceding claims, characterised in that the local bus (11) is designed for serial data transfer between the closed and/or open-loop control device (13 to 16) and at least one additional module (12).

5. Closed and/or open-loop control device according to one or more of the preceding claims, characterised in that the galvanic separating devices can be driven by the computer unit and the closed and/or open-loop control device (13 to 16) and/or an additional computer unit and the closed and/or open-loop control device (13 to 16) and/or the server (3).

6. Closed and/or open-loop control device according to one or more of the preceding claims, characterised in that the server (3) has at least one LAN/WAN interface.

7. Closed and/or open-loop control device according to one or more of the preceding claims, characterised in that parameters, such as for example the baud rate, the byte structure etc., for the transfer of data in each segment or in an associated group of segments (17 to 21) of the network bus (8) are different.

8. Closed and/or open-loop control device according to one or more of the preceding claims, characterised in that the communications module (25) forms a software controlled interface between the application program (24) and the computer unit of the closed and/or open-loop control device (13 to 16).

9. Closed and/or open-loop control device according to one or more of the preceding claims, characterised in that an application program (24) is activated by at least one communications module (25) of a closed and/or open-loop control device (13 to 16).

10. Closed and/or open-loop control device according to one or more of the preceding claims, characterised in that the server (3) is designed to allocate a assignment number, in particular an address, for each closed and/or open-loop control device (13 to 16) and for example for every additional module (12).

11. Data communications system for building management systems in which several closed and/or open-loop control devices according to claims 1 to 10 are connected to a server by a network bus, characterised in that the closed and/or open-loop control device (13 to 16) has at least three control levels, the latter being formed by an application program (24), a communications module (25) and hardware, which contains the operating system of the closed and/or open-loop control device (13 to 16).

12. Data communications system according to claim 11, characterised in that a separate closed and/or open-loop control device (13 to 16) is assigned to each room (6, 7) of an object, in particular a building (2).

13. Data communications system according to claim 11 or 12, characterised in that each closed and/or open-loop control device (13 to 16) is allocated to a zone comprising several rooms (6, 7) of an object.

14. Data communications system according to one or more of the preceding claims 11 to 13, characterised in that the closed and/or open-loop control device (13 to 16) and/or the server (3) is connected by a preferably wireless connecting device to the additional modules (12), for example a display and/or control unit.

15. Data communications system according to one or more of the preceding claims 11 to 14, characterised in that the closed and/or open-loop control device (13 to 16) is designed to allocate an assignment number, in particular an address for the additional module (12).

16. Data communications system according to one or more of the preceding claims 11 to 15, characterised in that the transfer of data between at least two closed and/or open-loop control devices (13 to 16) and/or the server (3) is performed by separate data packages.

17. Data communications system according to one or more of the preceding claims 11 to 16, characterised in that the data package is formed by a serial bus protocol, in particular a transmission protocol.

18. Data communications system according to one or more of the preceding claims 11 to 17, characterised in that the data package comprises consecutively arranged bytes, whereby a synchronisation byte is arranged at the beginning of the data package.

19. Data communications system according to one or more of the preceding claims 11 to 18, characterised in that each data package contains a receiving address and a sender address which corresponds to the assignment number, in particular the address of the individual closed and/or open-loop control devices (13 to 16).

20. Data communications system according to one or more of the preceding claims 11 to 19, characterised in that each data package contains a time code.

21. Data communications system according to one or more of the preceding claims 11 to 20, characterised in that a communications module (25) is allocated to each additional module (12).

22. Data communications system according to one or more of the preceding claims 11 to 21, characterised in that all application programs (24) and all communications modules (25) are stored in the server (3), whereby with the arrangement of one or more additional modules (12) on the network bus (8) the latter are assigned via the server (3) to one and/or more closed and/or open-loop control devices (13 to 16).

## Revendications

1. Dispositif de régulation et/ou de commande (13 à 16) pour la technique de direction des objets avec une unité de calcul, notamment un microprocesseur, qui est relié par un bus local (11) à au moins un module complémentaire (12), où le dispositif de régulation et/ou de commande (13 à 16) présente plusieurs interfaces (22, 23) pour un bus de réseau (8), notamment un réseau annulaire (9), par lesquelles ce dispositif de régulation et/ou de commande (13 à 16) est relié à un serveur (3) et/ou, à au moins un autre dispositif de régulation et/ou de commande (13 à 16), caractérisé en ce qu'il est disposé entre l'unité de calcul et les interfaces (22, 23) du bus réseau (8) un dispositif de séparation galvanique, où le bus réseau (8) est divisé par les interfaces (22, 23) séparées de manière galvanique en des segments individuels (17 à 21) et qu'un échange de données entre deux dispositifs de régulation et/ou de commande avoisinants, reliés notamment par un segment (17 à 21) du réseau annulaire (9) et/ou d'un ou de plusieurs autres dispositifs de régulation et/ou de commande additionnels, disposés dans le réseau annulaire (9), est possible dans les deux directions, et en ce que dans des segments différents (17 à 21), un échange de données entre deux dispositifs de régulation et/ou de commande (13 à 16) reliés directement à ces segments (17 à 21) peut avoir lieu simultanément.

2. Dispositif de régulation et/ou de commande selon la revendication 1, caractérisé en ce que le dispositif de régulation et/ou de commande (13 à 16) comprend un module de communication (25) où programme de communication pour chaque module complémentaire (12) qui est réalisé pour la commande des interfaces (22, 23) du bus réseau (8) et du bus local (11) et pour le traitement des signaux d'entrée et/ou de sortie des modules complémentaires (12) dans l'unité de calcul et/ou pour la transmission de ces signaux à un autre dispositif de réglage et/ou de commande (13 à 16) respectivement au serveur (3).

3. Dispositif de régulation et/ou de commande selon la revendication 1 ou 2, caractérisé en ce que le bus réseau (8) est réalisé pour la transmission sérielle des données entre le ou les dispositifs de régulation et/ou de commande (13 à 16) et le serveur (3).

4. Dispositif de régulation et/ou de commande selon l'une ou plusieurs des revendications précédentes, caractérisé en ce que le bus local (11) est réalisé pour la transmission sérielle des données entre le dispositif de régulation et/ou de commande (13 à 16) et au moins un module complémentaire (12).

5. Dispositif de régulation et/ou de commande selon l'une ou plusieurs des revendications précédentes, caractérisé en ce que les dispositifs de séparation galvaniques peuvent être commandés par l'unité de calcul respectivement le dispositif de régulation et/ou de commande (13 à 16) et/ou une unité de calcul supplémentaire respectivement le dispositif de régulation et/ou de commande (13 à 16) et/ou le serveur (3).

6. Dispositif de régulation et/ou de commande selon l'une ou plusieurs des revendications précédentes, caractérisé en ce que le serveur (3) présente au moins une interface LAN/WAN.

7. Dispositif de régulation et/ou de commande selon l'une ou plusieurs des revendications précédentes, caractérisé en ce que des paramètres, comme par exemple le taux de baud, la constitution de l'octet etc. sont différents pour la transmission des données dans chaque segment ou dans un groupe cohérent de segments (17 à 21) du bus réseau (8).

8. Dispositif de régulation et/ou de commande selon l'une ou plusieurs des revendications précédentes, caractérisé en ce que le module de communication (25) forme une interface commandée par un logiciel entre le programme d'application (24) et l'unité de calcul du dispositif de régulation et/ou de commande (13 à 16).

9. Dispositif de régulation et/ou de commande selon l'une ou plusieurs des revendications précédentes, caractérisé en ce qu'un programme d'application (24) est activé par au moins un module de communication (25) d'un dispositif de régulation et/ou de commande (13 à 16).

10. Dispositif de régulation et/ou de commande selon l'une ou plusieurs des revendications précédentes, caractérisé en ce que le serveur (3) est réalisé pour émettre un numéro d'attribution, notamment une adresse, pour chaque dispositif de régulation et/ou de commande (13 à 16) et par exemple pour chaque module complémentaire (12).

11. Système de communication de données pour la technique de direction des objets, dans lequel plusieurs dispositifs de régulation et/ou de commande selon l'une des revendications 1 à 10 sont reliés par un bus réseau à un serveur, caractérisé en ce que le dispositif de régulation et/ou de commande (13 à 16) présente au moins trois niveaux de commande, où ceux-ci sont constitués d'un programme d'application (24), d'un module de communication (25) et d'un matériel contenant le système de fonctionnement du dispositif de régulation et/ou de commande (13 à 16).

12. Système de communication des données selon la revendication 11, caractérisé en ce qu'il est associé à chaque pièce (6, 7) d'un objet, notamment d'un bâtiment (2), un dispositif de régulation et/ou de commande propre (13 à 16).

13. Système de communication des données selon la revendication 11 ou 12, caractérisé en ce qu'il est associé respectivement un dispositif de régulation et/ou de commande (13 à 16) à une zone constituée de plusieurs pièces (6, 7) d'un objet.

14. Système de communication des données selon l'une ou plusieurs des revendications précédentes 11 à 13, caractérisé en ce que le dispositif de régulation et/ou de commande (13 à 16) et/ou le serveur (3) est relié par un dispositif de liaison de préférence sans fil aux modules complémentaires (12), par exemple à un appareil d'indication et/ou de commande.

15. Système de communication des données selon l'une ou plusieurs des revendications précédentes 11 à 14, caractérisé en ce que le dispositif de régulation et/ou de commande (13 à 16) est réalisé pour émettre un numéro d'attribution, notamment une adresse, pour les modules complémentaires (12).

16. Système de communication des données selon l'une ou plusieurs des revendications précédentes 11 à 15, caractérisé en ce que la transmission des données a lieu entre au moins deux dispositifs de régulation et/ou de commande (13 à 16) et/ou le serveur (3) par des paquets de données individuels.

17. Système de communication des données selon l'une ou plusieurs des revendications précédentes 11 à 16, caractérisé en ce que le paquet de données est formé par un protocole de bus sériel, notamment par un protocole de communication.

18. Système de communication des données selon l'une ou plusieurs des revendications précédentes 11 à 17, caractérisé en ce que le paquet de données est constitué d'octets disposés les uns derrière les autres, et au début du paquet de données étant disposé un octet de synchronisation.

19. Système de communication des données selon l'une ou plusieurs des revendications 11 à 18, caractérisé en ce que chaque paquet de données contient une adresse de réception et une adresse d'émission à laquelle correspond le numéro d'attribution, notamment l'adresse des différents' dispositifs de régulation et/ou de commande (13 à 16).

20. Système de communication des données'selon l'une ou plusieurs des revendications précédentes 11 à 19, caractérisé en ce que chaque paquet de données contient un code de temps.

21. Système de communication des données selon l'une ou plusieurs des revendications précédentes 11 à 20, caractérisé en ce qu'il est associé à chaque module complémentaire (12) un module de communication (25).

22. Système de communication des données selon l'une ou plusieurs des revendications précédentes 11 à 21, caractérisé en ce que tous les programmes d'application (24) et tous les modules de communication (25) sont stockés dans le serveur (3), où lors de l'application d'un ou de plusieurs modules complémentaires (12) au bus réseau (8), ceux-ci sont attribués par le serveur (3) à un et/ou plusieurs dispositifs de régulation et/ou de commande (13 à 16).
